(19) Europäisches Patentamt
European Patent Office
Office européen des brevets

(11) **EP 4 557 325 A1**

(12) **EUROPEAN PATENT APPLICATION**
published in accordance with Art. 153(4) EPC

(43) Date of publication:
**21.05.2025 Bulletin 2025/21**

(21) Application number: **23864545.1**

(22) Date of filing: **18.08.2023**

(51) International Patent Classification (IPC):
**H01F 27/245** (2006.01)

(52) Cooperative Patent Classification (CPC):
**H01F 27/245; H01F 27/36; H01F 38/14; H02J 7/00; H02J 50/10; H02J 50/70**

(86) International application number:
**PCT/CN2023/113759**

(87) International publication number:
**WO 2024/055812 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 CN 202211110319**

(71) Applicant: **Honor Device Co., Ltd.
Shenzhen, Guangdong 518040 (CN)**

(72) Inventors:
• HUANG, Hua
  Shenzhen, Guangdong 518040 (CN)
• SONG, Jiaxiang
  Shenzhen, Guangdong 518040 (CN)
• ZHAO, Xin
  Shenzhen, Guangdong 518040 (CN)
• ZHANG, Anle
  Shenzhen, Guangdong 518040 (CN)

(74) Representative: **Goddar, Heinz J.
Boehmert & Boehmert
Anwaltspartnerschaft mbB
Pettenkoferstrasse 22
80336 München (DE)**

(54) **MAGNETIC ISOLATION SHEET, COIL MODULE, AND ELECTRONIC DEVICE**

(57) Embodiments of this application are applicable to the field of wireless charging, and relate to a magnetic isolation sheet, a coil module, and an electronic device. The magnetic isolation sheet is used in a coil module in a wireless charging device. The magnetic isolation sheet includes a first nanocrystalline layer. The first nanocrystalline layer includes a first region in a shape of a non-closed ring. A material of the first region is a nanocrystal on which magnetic crushing has not been performed. Because the first region is in the shape of a non-closed ring, i.e., the first region is provided with a notch penetrating the first region, through the notch, a change in magnetic flux when magnetic lines of force in a magnetic field pass through the nanocrystal can be avoided, and the heating of a nanocrystalline material during wireless charging is avoided. **In** addition, the material of the first region is the nanocrystal on which magnetic crushing has not been performed, so that the charging efficiency of the wireless charging device in which the magnetic isolation sheet is used is not reduced. **In** summary, the magnetic isolation sheet provided in the embodiments of this application can improve wireless charging efficiency while avoiding nanocrystal heating during wireless charging.

FIG. 5

## Description

This application claims priority to Chinese Patent Application No. 202211110319.0, filed with the China National Intellectual Property Administration on September 13, 2022 and entitled "MAGNETIC ISOLATION SHEET, COIL MODULE, AND ELECTRONIC DEVICE", which is incorporated herein by reference in its entirety.

## TECHNICAL FIELD

This application relates to the field of wireless charging, and more specifically, to a magnetic isolation sheet, a coil module, and an electronic device.

## BACKGROUND

In the field of wireless charging, an induction coil for charging usually needs to cooperate with a magnetic isolation sheet to implement a wireless charging function. The magnetic isolation sheet is usually made of a nanocrystalline material.

The nanocrystalline material is a material having a high saturation magnetic induction, a high magnetic permeability, a low coercivity, and a low high-frequency loss, has excellent comprehensive magnetic properties, and is widely used in the field of wireless charging. During wireless charging, a conventional nanocrystal is prone to nanocrystal heating. To avoid nanocrystal heating during wireless charging, magnetic crushing is usually performed on a nanocrystal. However, a nanocrystal obtained through magnetic crushing has a low saturation magnetic induction strength (saturation magnetic induction, $B_S$) value and a low magnetic permeability. As a result, a wireless charging device using a nanocrystal obtained through magnetic crushing as a magnetic isolation sheet has low charging efficiency.

Based on this, how to improve the charging efficiency of a wireless charging device has become a problem to be urgently resolved.

## SUMMARY

This application provides a magnetic isolation sheet, a coil module, and an electronic device, to improve the charging efficiency of a wireless charging device.

According to a first aspect, a magnetic isolation sheet is provided. The magnetic isolation sheet is used in a coil module in a wireless charging device. The magnetic isolation sheet includes a first nanocrystalline layer. The first nanocrystalline layer includes a first region in a shape of a non-closed ring. A material of the first region is a nanocrystal on which magnetic crushing has not been performed.

It should be understood that the ring may be a circular ring, or may be a ring of another shape. This is not limited in embodiments of this application.

The magnetic isolation sheet provided in the embodiments of this application is used in the coil module in the wireless charging device. The magnetic isolation sheet includes the first nanocrystalline layer. The first nanocrystalline layer includes the first region in the shape of a non-closed ring. The material of the first region is a nanocrystal on which magnetic crushing has not been performed. Because the first region is in the shape of a non-closed ring, i.e., the first region is provided with a notch penetrating the first region, through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength $B_S$ value and a magnetic permeability of the first nanocrystalline layer do not decrease, i.e., do not cause a decrease in the charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible implementation, the first nanocrystalline layer further includes a second region, the second region is disposed at a periphery of the first region, and a material of the second region is a nanocrystal on which magnetic crushing has been performed.

It should be understood that the second region being disposed at the periphery of the first region may be that the second region is disposed on an inner side and/or an outer side of the first region, the second region may be only on an inner side of the first region, the second region may be only on an outer side of the first region, or the second region may be on an inner side and an outer side of the first region. This is not limited in the embodiments of this application.

The magnetic isolation sheet provided in the embodiments of this application is used in the coil module in the wireless charging device, and includes at least one layer of nanocrystal. The at least one layer of nanocrystal includes the first nanocrystalline layer. The first nanocrystalline layer includes the first region and the second region. The shape of the first region is a region of a non-closed ring. The second region is at the periphery of the first region. The material of the first region is a nanocrystal on which magnetic crushing has not been performed. The material of the second region is a nanocrystal on which magnetic crushing has been performed. In this case, this is equivalent to that a nanocrystal on which magnetic crushing has been performed is added to an edge region of the first region, and through the nanocrystal on which magnetic crushing has been performed in the edge region of the first region, an eddy-current loss generated in the edge region of the first region due to a change in magnetic flux is reduced, thereby further avoiding heating of the magnetic isolation sheet due to the eddy-current loss.

In a possible implementation, the first region and the second region are adjacent to each other.

The magnetic isolation sheet provided in the embodiments of this application is used in the coil module in the wireless charging device, and includes at least one layer of nanocrystal. The at least one layer of nanocrystal includes the first nanocrystalline layer. The first nanocrystalline layer includes the first region and the second region. The first region is a region of a non-closed ring. The second region is on the inner side and/or the outer side of the first region. The first region and the second region are adjacent to each other. The first region in the first nanocrystalline layer is made of a nanocrystal on which magnetic crushing has not been performed. The second region is made of a nanocrystal on which magnetic crushing has been performed. Because the first region and the second region are adjacent to each other, in this case, a nanocrystal on which magnetic crushing has been performed can be added to the edge region of the first region, and through the nanocrystal on which magnetic crushing has been performed in the edge region of the first region, an eddy-current loss generated due to a change in magnetic flux is reduced, thereby further avoiding heating of the magnetic isolation sheet due to the eddy-current loss.

In a possible implementation, the first region includes at least one first notch, and the first notch penetrates an inner diameter and an outer diameter of the ring of the first region.

It should be understood that when a size of an electronic device in which the magnetic isolation sheet is used is large, for example, the magnetic isolation sheet is used in a mobile phone, because a battery capacity of the mobile phone is usually large, a size of the used magnetic isolation sheet is large correspondingly. When the size of the magnetic isolation sheet is larger, an eddy-current loss on the magnetic isolation sheet is larger.

The magnetic isolation sheet provided in the embodiments of this application may be used in the coil module in the wireless charging device, and includes at least one layer of nanocrystal. The at least one layer of nanocrystal includes the first nanocrystalline layer. The first nanocrystalline layer includes the first region and the second region. The first region is a region of a non-closed ring. The second region is at the periphery of the first region. The first region and the second region are connected. The first region in the first nanocrystalline layer is made of a nanocrystal on which magnetic crushing has not been performed. The second region is made of a nanocrystal on which magnetic crushing has been performed. When the size of the magnetic isolation sheet is greater than a preset threshold, the first region includes at least one first notch, and the first notch penetrates the inner diameter and the outer diameter of the ring of the first region. Because the first region is a region of a non-closed ring, the first region including the at least one first notch is equivalent to that two or more notches are provided in the region of a ring. The two or more notches are respectively a notch that makes the region of a ring non-closed and the at least one first notch provided in the first region. In this case, a magnetic field that is between a wireless charging transmitting end device and the wireless charging receiving end device and is perpendicular to a plane in which a power receiving coil is located can be released through the notch in the first region, to reduce an eddy-current loss on the magnetic isolation sheet, thereby avoiding the eddy-current loss caused by a large size of the magnetic isolation sheet, and further avoiding heating of the magnetic isolation sheet due to a large eddy-current loss.

In a possible implementation, the first nanocrystalline layer further includes a third region disposed concentric with the first region, the third region is in a shape of a non-closed ring, and a material of the third region is a nanocrystal on which magnetic crushing has not been performed.

It should be understood that the first region and the third region are two concentrically disposed regions. The first region may be on an inner side of the third region, or may be on an outer side of the third region. This is not limited in the embodiments of this application.

The magnetic isolation sheet provided in the embodiments of this application is used in the coil module in the wireless charging device. The magnetic isolation sheet includes the first nanocrystalline layer. The first nanocrystalline layer includes the first region in the shape of a non-closed ring and the third region disposed concentric with the first region. The shape of the third region is also a non-closed ring. The materials of the first region and the third region are a nanocrystal on which magnetic crushing has not been performed. Because the first region and the third region are in the shape of a non-closed ring, i.e., each of the first region and the third region is provided with the notch penetrating the first region, through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength $B_S$ value and a magnetic permeability of the first nanocrystalline layer do not decrease, and in this case, do not cause a decrease in the charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible implementation, the first nanocrystalline layer further includes a fourth region disposed concentric with the first region, the fourth region is in a shape of a closed ring, an outer diameter of the fourth region is less than the inner diameter of the first region, and a material of the fourth region is a nanocrystal on which magnetic crushing has not been performed.

It should be understood that because the outer diameter of the fourth region is less than the inner diameter of the first region, in this case, this is equivalent to that the first region is on an outer side of the fourth region.

The magnetic isolation sheet provided in the embodiments of this application is used in the coil module in the wireless charging device. The magnetic isolation sheet includes the first nanocrystalline layer. The first nanocrystalline layer includes the first region in the shape of a non-closed ring and the fourth region disposed concentric with the first region. The shape of the fourth region is a closed ring. The outer diameter of the fourth region is less than the inner diameter of the first region, this is equivalent to that the first region is on an outer side of the fourth region. The materials of the first region and the fourth region are a nanocrystal on which magnetic crushing has not been performed. Because the shape of the first region is a non-closed ring and the first region is on the outer side of the fourth region, in this case, this is equivalent to that a notch is provided on the outer side of the first nanocrystalline layer. Through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region and the fourth region in the first nanocrystalline layer are both a nanocrystal on which magnetic crushing has not been performed. In this case, a saturation magnetic induction strength $B_S$ value and a magnetic permeability of the first nanocrystalline layer do not decrease, i.e., do not cause a decrease in the charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible implementation, the magnetic isolation sheet further includes a second nanocrystalline layer, and a material of the second nanocrystalline layer is a nanocrystal on which magnetic crushing has been performed.

The magnetic isolation sheet provided in the embodiments of this application includes the first nanocrystalline layer and the second nanocrystalline layer. The first nanocrystalline layer includes the first region. The first region is a region of a non-closed ring. The first region on the first nanocrystalline layer is made of a nanocrystal on which magnetic crushing has not been performed. The second nanocrystalline layer is made of a nanocrystal on which magnetic crushing has been performed. Because the first region on the first nanocrystalline layer is a region of a non-closed ring, a manufacturing process of the first nanocrystalline layer is relatively complex, and a manufacturing process of the second nanocrystalline layer is relatively simple. In the embodiments of this application, the second nanocrystalline layer with a relatively simple manufacturing process is used as a nanocrystalline layer in the at least one layer of nanocrystal, so that the difficulty of manufacturing the magnetic isolation sheet can be reduced.

In a possible implementation, a projection of the first nanocrystalline layer and a projection of the second nanocrystalline layer overlap.

In a possible implementation, the second nanocrystalline layer further includes a second notch, and a projection of the second notch and a projection of the first region in the first nanocrystalline layer overlap.

According to a second aspect, a magnetic isolation sheet is provided. The magnetic isolation sheet is used in a coil module in a wireless charging device. The magnetic isolation sheet includes a first nanocrystalline layer. The first nanocrystalline layer includes a first region. The first region includes regions of at least two concentric rings. The at least two concentric rings include a first ring and a second ring. An inner diameter of the first ring is greater than an outer diameter of the second ring. The first region in the first nanocrystalline layer is made of a nanocrystal on which magnetic crushing has not been performed.

The magnetic isolation sheet provided in embodiments of this application is used in the coil module in the wireless charging device. The magnetic isolation sheet includes at least one layer of nanocrystal. The at least one layer of nanocrystal includes the first nanocrystalline layer. The first nanocrystalline layer includes the first region. The first region is regions of at least two concentric rings. The at least two concentric rings include the first ring and the second ring. The inner diameter of the first ring is greater than the outer diameter of the second ring. That is, a gap exists between the first ring and the second ring in the first region, and through the gap, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength

$B_S$ value and a magnetic permeability of the first nanocrystalline layer do not decrease, and in this case, do not cause a decrease in the charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible implementation, the first nanocrystalline layer further includes a second region, the second region is disposed at a periphery of the first region, and the second region in the first nanocrystalline layer is made of a nanocrystal on which magnetic crushing has been performed.

In a possible implementation, the first region and the second region are adjacent to each other.

In a possible implementation, the first nanocrystalline layer further includes a third region disposed concentric with the first region, the third region is in a shape of a non-closed ring, and a material of the third region is a nanocrystal on which magnetic crushing has not been performed.

In a possible implementation, the first nanocrystalline layer further includes a fourth region disposed concentric with the first region, the fourth region is in a shape of a closed ring, an outer diameter of the fourth region is less than the inner diameter of the first region, and a material of the fourth region is a nanocrystal on which magnetic crushing has not been performed.

In a possible implementation, at least two nanocrystalline layers further include a second nanocrystalline layer, and a material of the second nanocrystalline layer is a nanocrystal on which magnetic crushing has been performed.

In a possible implementation, a projection of the first nanocrystalline layer and a projection of the second nanocrystalline layer overlap.

In a possible implementation, the second nanocrystalline layer further includes a second notch, and a projection of the second notch and a projection of the first region in the first nanocrystalline layer overlap.

According to a third aspect, a coil module is provided. The coil module is used in an electronic device. The electronic device is configured for wireless charging. The coil module includes the magnetic isolation sheet in the first aspect or the second aspect and an induction coil.

The coil module provided in embodiments of this application includes the magnetic isolation sheet. The magnetic isolation sheet includes at least one layer of nanocrystal. The at least one layer of nanocrystal includes a first nanocrystalline layer. The first nanocrystalline layer includes a first region. The first region is a region of a non-closed ring, i.e., the first region is provided with a notch penetrating the first region. Through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength $Bs$ value and a magnetic permeability of the first nanocrystalline layer do not decrease, and in this case, do not cause a decrease in charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible implementation, the induction coil is disposed on a side of the magnetic isolation sheet, and a distance between the first nanocrystalline layer and the induction coil is less than a distance between a second nanocrystalline layer and the induction coil.

In a possible implementation, the induction coil is disposed on a side of the magnetic isolation sheet, and a distance between the first nanocrystalline layer and the induction coil is greater than a distance between a second nanocrystalline layer and the induction coil.

The coil module provided in the embodiments of this application includes the magnetic isolation sheet and the induction coil. The magnetic isolation sheet includes the first nanocrystalline layer and the second nanocrystalline layer. The second nanocrystalline layer is made of a nanocrystal on which magnetic crushing has been performed, and the distance between the second nanocrystalline layer and the induction coil in the coil module is less than the distance between the first nanocrystalline layer and the induction coil. In this case, a change in magnetic flux generated when the induction coil operates can be absorbed by the second nanocrystalline layer that is closer to the induction coil, thereby further avoiding an eddy-current loss on the magnetic isolation sheet, so that while wireless charging efficiency is improved through the first nanocrystalline layer, heating generated due to the eddy-current loss on the magnetic isolation sheet is further avoided.

In a possible implementation, the induction coil is disposed on a side of the magnetic isolation sheet. The magnetic isolation sheet includes a first nanocrystalline layer and a second nanocrystalline layer. The second nanocrystalline layer includes a second notch. A projection of the second notch and a projection of the first region overlap. A distance between the second nanocrystalline layer and the induction coil is less than a distance between the first nanocrystalline layer and the induction coil. A material of the second nanocrystalline layer is a nanocrystal on which magnetic crushing has been performed.

The coil module provided in the embodiments of this application includes the magnetic isolation sheet and the induction coil. The magnetic isolation sheet includes the first nanocrystalline layer and the second nanocrystalline layer. The second nanocrystalline layer includes the second notch. The projection of the second notch and the projection of the first region overlap. The material of the second nanocrystalline layer is a nanocrystal on which magnetic crushing has been performed. The distance between the second nanocrystalline layer and the induction coil in the coil module is less than the distance between the first nanocrystalline layer and the induction coil. In this case, this is equivalent to that the induction coil can occupy a space in which the second notch is located in the second nanocrystalline layer, so that while a thickness of the induction coil is kept unchanged, with the induction coil occupying the space in which the second notch is located, a thickness of the magnetic isolation sheet is reduced, so that a thickness of the coil module obtained by combining the magnetic isolation sheet and the induction coil is reduced, thereby saving a space in the wireless charging device.

In a possible implementation, a projection of the induction coil and a projection of the first region on the magnetic isolation sheet overlap.

The coil module provided in the embodiments of this application includes the induction coil and the magnetic isolation sheet. The magnetic isolation sheet includes at least one layer of nanocrystal. The at least one layer of nanocrystal includes the first nanocrystalline layer. The first nanocrystalline layer includes the first region. The first region is a region of a non-closed ring. The first region in the first nanocrystalline layer is a nanocrystal on which magnetic crushing has not been performed. The projection of the first region and the projection of the induction coil overlap. In this case, a magnetic field generated when the induction coil operates can be absorbed by the nanocrystal on which magnetic crushing has not been performed on the first nanocrystalline layer, so that an eddy-current loss caused by a change in magnetic flux of a magnetic field is avoided, thereby avoiding heating of the magnetic isolation sheet due to the eddy-current loss, and improving the efficiency of the wireless charging device.

In a possible implementation, a size of the induction coil is the same as a size of the first region on the magnetic isolation sheet.

The coil module provided in the embodiments of this application includes the induction coil and the magnetic isolation sheet. The magnetic isolation sheet includes at least one layer of nanocrystal. The at least one layer of nanocrystal includes the first nanocrystalline layer. The first nanocrystalline layer includes the first region. The first region is a region of a non-closed ring. The first region in the first nanocrystalline layer is a nanocrystal on which magnetic crushing has not been performed. Because the projection of the first region and the projection of the induction coil overlap and the size of the induction coil is the same as the size of the first region on the magnetic isolation sheet, in this case, a magnetic field generated when the induction coil operates can be precisely absorbed by the nanocrystal on which magnetic crushing has not been performed on the first nanocrystalline layer, to avoid the arrangement of a large-size nanocrystal on which magnetic crushing has not been performed below the induction coil to absorb a magnetic field generated when the induction coil operates, thereby avoiding an excessively large size of the magnetic isolation sheet. In addition, the coil module provided in the embodiments of this application can further effectively improve the Charging efficiency of the wireless charging device through the nanocrystal on which magnetic crushing has not been performed in the first region, i.e., while the heating of the magnetic isolation sheet due to an eddy-current loss is avoided and the efficiency of the wireless charging device is improved, the coil module provided in the embodiments of this application can effectively reduce a space occupied by the coil module in the electronic device.

In a possible case, the first nanocrystalline layer in the magnetic isolation sheet further includes a second region, the second region is disposed at a periphery of the first region, and the second region in the first nanocrystalline layer is made of a nanocrystal on which magnetic crushing has been performed.

In a possible implementation, the first region and the second region in the magnetic isolation sheet are adjacent to each other.

In a possible implementation, the magnetic isolation sheet further includes a second nanocrystalline layer, and a material of the second nanocrystalline layer is a nanocrystal on which magnetic crushing has been performed.

In a possible implementation, a projection of the first nanocrystalline layer and a projection of the second nanocrystalline layer in the magnetic isolation sheet overlap.

In a possible implementation, the induction coil is disposed on a side of the magnetic isolation sheet, and a distance between the first nanocrystalline layer in the magnetic isolation sheet and the induction coil is less than a distance between a second nanocrystalline layer and the induction coil.

In a possible implementation, the induction coil is disposed on a side of the magnetic isolation sheet, and a distance between the first nanocrystalline layer in the magnetic isolation sheet and the induction coil is greater than a distance between a second nanocrystalline layer and the induction coil.

In a possible implementation, the induction coil is disposed on a side of the magnetic isolation sheet. The second nanocrystalline layer includes a second notch. A projection of the second notch and a projection of the first region overlap. The second nanocrystalline layer is made of a nanocrystal on which magnetic crushing has been performed. A distance between the second nanocrystalline layer and the induction coil is less than a distance between the first nanocrystalline layer and the induction coil.

According to a fourth aspect, an electronic device is provided. The electronic device includes the coil module in the foregoing third aspect.

In a possible implementation, the electronic device is a wireless charging transmitting end device.

For example, the electronic device is a charging plate.

In a possible implementation, the electronic device is a wireless charging receiving end device.

For example, the electronic device is a smartwatch.

For example, the electronic device is a mobile phone.

The magnetic isolation sheet, the coil module, and the electronic device are provided in the embodiments of this application. The magnetic isolation sheet is used in the coil module in the wireless charging device. The magnetic isolation sheet includes the first nanocrystalline layer. The first nanocrystalline layer includes the first region in the shape of a non-closed ring. The material of the first region is a nanocrystal on which magnetic crushing has not been performed. Because the first region is in the shape of a non-closed ring, i.e., the first region is provided with a notch penetrating the first region, through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength $Bs$ value and a magnetic permeability of the first nanocrystalline layer do not decrease, and in this case, do not cause a decrease in charging efficiency of the wireless charging device in which the magnetic isolation sheet is used. In summary, the magnetic isolation sheet provided in the embodiments of this application can improve wireless charging efficiency while avoiding nanocrystal heating during wireless charging.

## BRIEF DESCRIPTION OF DRAWINGS

FIG. 1 is a schematic diagram of a power feeding coil and a power receiving coil in a wireless charging device;

FIG. 2 is a schematic diagram of a nanocrystal on which magnetic crushing has been performed;

FIG. 3 is a schematic diagram of shapes of small chips in a nanocrystal on which magnetic crushing has been performed;

FIG. 4 is a schematic diagram of an application scenario according to an embodiment of this application;

FIG. 5 is a schematic diagram of a structure of a magnetic isolation sheet according to an embodiment of this application;

FIG. 6 is a schematic diagram of shapes of a first region on a magnetic isolation sheet according to an embodiment of this application;

FIG. 7 is a schematic diagram of a nanocrystalline layer on a magnetic isolation sheet according to an embodiment of this application;

FIG. 8 is a schematic diagram of a magnetic field distribution between a power receiving coil and a power feeding coil according to an embodiment of this application;

FIG. 9 is a schematic diagram of a magnetic field distribution on a magnetic isolation sheet according to an embodiment of this application;

FIG. 10 is a schematic diagram of a structure of another magnetic isolation sheet according to an embodiment of this application;

FIG. 11 is a schematic diagram of a position relationship between a first region and a second region according to an embodiment of this application;

FIG. 12 is a schematic diagram of a structure of a first nanocrystalline layer according to an embodiment of this application;

FIG. 13 is a schematic diagram of a structure of a first nanocrystalline layer according to an embodiment of this application;

FIG. 14 is a schematic diagram of a structure of another magnetic isolation sheet according to an embodiment of this application;

FIG. 15 is a schematic diagram of a structure of a first region and a third region according to an embodiment of this application;

FIG. 16 is a schematic diagram of a structure of another magnetic isolation sheet according to an embodiment of this application;

FIG. 17 is a schematic diagram of a structure of another magnetic isolation sheet according to an embodiment of this application;

FIG. 18 is a schematic diagram of a first notch according to an embodiment of this application;

FIG. 19 is a schematic diagram of a first notch according to an embodiment of this application;

FIG. 20 is a schematic diagram of a magnetic field distribution on a magnetic isolation sheet according to an embodiment of this application;

FIG. 21 is a schematic diagram of a structure of another magnetic isolation sheet according to an embodiment of this application;

FIG. 22 is a schematic diagram of a position relationship between a first nanocrystalline layer and a second nanocrystalline layer according to an embodiment of this application;

FIG. 23 is a schematic diagram of a structure of another magnetic isolation sheet according to an embodiment of this application;

FIG. 24 is a schematic diagram of a position relationship between a first nanocrystalline layer and a second nanocrystalline layer according to an embodiment of this application; and

FIG. 25 is a schematic diagram of an electronic device according to this application.

## DESCRIPTION OF EMBODIMENTS

Technical solutions in embodiments of this application are described below with reference to the accompanying drawings in embodiments of this application. In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of embodiments of this application, "a plurality of" represents two or more.

The terms "first", "second", and "third" described below are merely intended for an objective of description, and shall not be understood as an indication or implication of relative importance or implicit indication of the quantity of indicated technical features. Therefore, a feature defined with "first", "second", or "third" may explicitly or implicitly include one or more such features.

For ease of understanding, example descriptions of some concepts related to the embodiments of this application are provided for reference.

1. Wireless charging

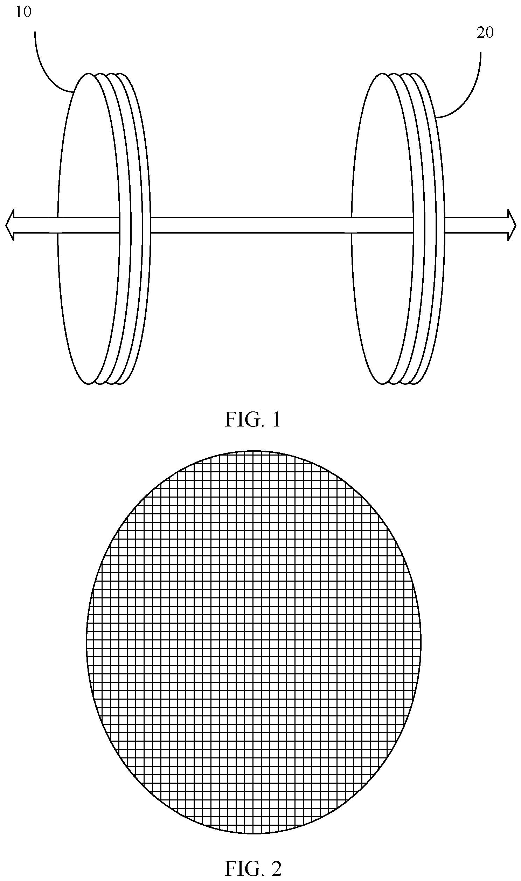

Wireless charging means that a wireless charging transmitting end device conducts energy to a wireless charging receiving end device by means of a principle of near-field induction of a magnetic field, and the wireless charging receiving end device then converts the received energy into electric energy and stores the electric energy in a battery of the wireless charging receiving end device, to complete charging of the wireless charging receiving end device. For example, as shown in FIG. 1, a power feeding coil 10 in a wireless charging transmitting end device (not shown in the figure) conducts energy to a power receiving coil 20 in a wireless charging receiving end device (not shown in the figure) by means of near-field induction of a magnetic field. Then, the wireless charging receiving end device (not shown in the figure) converts the energy induced in the power receiving coil 20 into electric energy for storage in a battery (not shown in the figure), to implement a wireless charging function. An electronic device using wireless charging does not have an exposed conductive interface, so that disorderly transmission lines between devices can be omitted and safety can be higher.

2. Eddy-current loss

When a conductor moves in a nonuniform magnetic field or is in a magnetic field that changes with time, an energy loss caused by an induced current in the conductor is referred to as an eddy-current loss. Rings of closed current lines formed inside the conductor are referred to as eddy currents (also referred to as Foucault currents). A nanocrystal has a very high electrical conductivity. The electrical conductivity of the nanocrystal is 8e5 s/m. A high electrical conductivity generates a severe eddy-current loss when a nanocrystal is used as a magnetic isolation sheet in a wireless charging device, and further causes heating of the nanocrystal during wireless charging.

3. Magnetic crushing

To avoid heating of a nanocrystal during wireless charging, the nanocrystal is usually crushed into a plurality of small chips having a diameter of approximately 1 mm. For example, the crushing of the nanocrystal into the plurality of small chips may be shown in FIG. 2. The plurality of small chips are included, and the plurality of small chips are uniformly distributed. A process of crushing the nanocrystal into the plurality of small chips is referred to as magnetic crushing.

Shapes of the plurality of small chips that are crushed may include a plurality of shapes in the following.

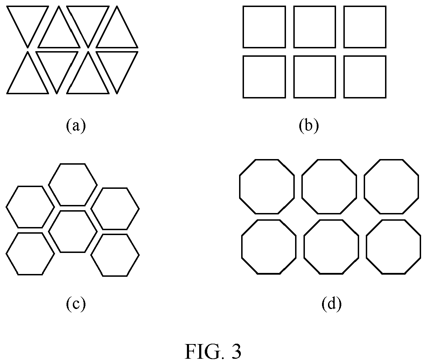

For example, as shown in (a) in FIG. 3, the shapes of small chips in the magnetically crushed nanocrystal are triangles.

For example, as shown in (b) in FIG. 3, the shapes of small chips in the magnetically crushed nanocrystal are quadrangles.

For example, as shown in (c) in FIG. 3, the shapes of small chips in the magnetically crushed nanocrystal are hexagons.

For example, as shown in (d) in FIG. 3, the shapes of small chips in the magnetically crushed nanocrystal are octagons.

It should be understood that the foregoing content and the accompanying drawings are merely examples for describing shapes and an arrangement manner of the small chips obtained through crushing, and are not intended to limit the shapes and the arrangement manner of the small chips obtained through crushing in this application.

Through magnetic crushing of a nanocrystal, an eddy-current loss on the nanocrystal during wireless charging can be reduced, so that a problem of heating of the nanocrystal during wireless charging can be effectively mitigated. Through magnetic crushing of the nanocrystal, a saturation magnetic induction strength *Bs* value and a magnetic permeability of the nanocrystal can also be reduced, thereby reducing charging efficiency.

4. Wireless charging efficiency

A common transmitting end capacitor coil series-series (series-series, SS) model is used as an example. Wireless charging efficiency may be calculated by using Formula (1). The SS model is a compensation model for leakage induction of a coil in a circuit.

$$\eta = \frac{(\omega \cdot M)^2 R_L}{R_T[(R_R+R_L)^2+X_R^2]+(\omega \cdot M)^2(R_R+R_L)} \qquad \text{Formula (1)}$$

$\eta$ represents transmission efficiency of wireless charging. $\omega$ represents an angular frequency of XX. $R_L$ represents a load resistance. $R_T$ represents an internal resistance of a transmitting end. $R_R$ represents an internal resistance of a receiving end. $X_R$ represents an inductive reactance of the receiving end. M represents a mutual inductance between the wireless charging transmitting end device and the wireless charging receiving end device. M may be calculated by using Formula (2).

$$M = k\sqrt{L_{tx} \cdot L_{rx}} \qquad \text{Formula (2)}$$

K represents a coupling coefficient. $L_{tx}$ represents a coil self-inductance of a power generation coil in a power generation device. $L_{rx}$ represents a coil self-inductance of a to-be-charged coil in a device to be charged.

It may be learned from the foregoing Formula (1) that a larger mutual inductance indicates higher wireless charging efficiency. It can be learned from Formula (2) that a larger coupling coefficient indicates a larger coil self-inductance of the power feeding coil, and a larger coil self-inductance of the power receiving coil indicates a larger mutual inductance. In other words, a larger coupling coefficient indicates a larger coil self-inductance of the power feeding coil, and a larger coil self-inductance of the power receiving coil indicates higher wireless charging efficiency.

At present, in the field of wireless charging, an induction coil for wireless charging usually needs to cooperate with a magnetic isolation sheet to implement a wireless charging function. A magnetic isolation sheet using a nanocrystal on which magnetic crushing has not been performed can improve a coupling coefficient of the induction coil, and also increase an inductance of the induction coil, so that a mutual inductance M can be improved, thereby improving the efficiency of a wireless charging system. The nanocrystal is a material having a high saturation magnetic induction strength, a high magnetic permeability, a low coercivity, and a low high-frequency loss, has excellent comprehensive magnetic properties, and is widely used in the field of wireless charging. Because the nanocrystal has a high electrical conductivity, the high electrical conductivity generates a high eddy-current loss, causing heating of the nanocrystal during wireless charging. To avoid heating of a nanocrystalline material during wireless charging, magnetic crushing is usually performed on the nanocrystalline material, i.e., a nanocrystal is treated into a plurality of nanocrystal chips having a diameter of approximately 1 mm. After magnetic crushing is performed on the nanocrystal, the eddy-current loss on the nanocrystal is greatly reduced, thereby effectively avoiding a problem of heating of the nanocrystalline material during wireless charging. However, a nanocrystalline material on which magnetic crushing has been performed has a low saturation magnetic induction strength *Bs* value and a low magnetic permeability. As a result, a wireless charging device using a nanocrystal obtained through magnetic crushing as a magnetic isolation sheet has low charging efficiency.

In view of this, embodiments of this application provide a magnetic isolation sheet, a coil module, and an electronic device, to resolve the foregoing problem of low charging efficiency. The magnetic isolation sheet provided in the embodiments of this application may be used in a coil module in a wireless charging device. The magnetic isolation sheet includes a first nanocrystalline layer. The first nanocrystalline layer includes a first region in a shape of a non-closed ring. A material of the first region is a nanocrystal on which magnetic crushing has not been performed. Because the first region is in the shape of a non-closed ring, i.e., the first region is provided with a notch, through the notch in the first region, a change in magnetic flux generated when magnetic lines of force pass through the nanocrystal can be avoided, so that an eddy-current loss caused by the change in magnetic flux is avoided, and a problem of heating generated in the nanocrystal during wireless charging is avoided. In addition, because the first region in the first nanocrystalline layer is a nanocrystal on which magnetic crushing has not been performed, a saturation magnetic induction strength $B_S$ value and a magnetic permeability of the nanocrystal in the first region are high, so that the charging efficiency of the wireless charging device in which the magnetic isolation sheet is used is high. In summary, the magnetic isolation sheet provided in the embodiments of this application can improve wireless charging efficiency while avoiding nanocrystal heating during wireless charging.

Application scenarios provided in embodiments of this application are described below in conjunction with the accompanying drawings.

A magnetic isolation sheet provided in embodiments of this application may be used in a wireless charging device. The wireless charging device may be a wireless charging transmitting end device, or may be a wireless charging receiving end device. This is not limited in the embodiments of this application.

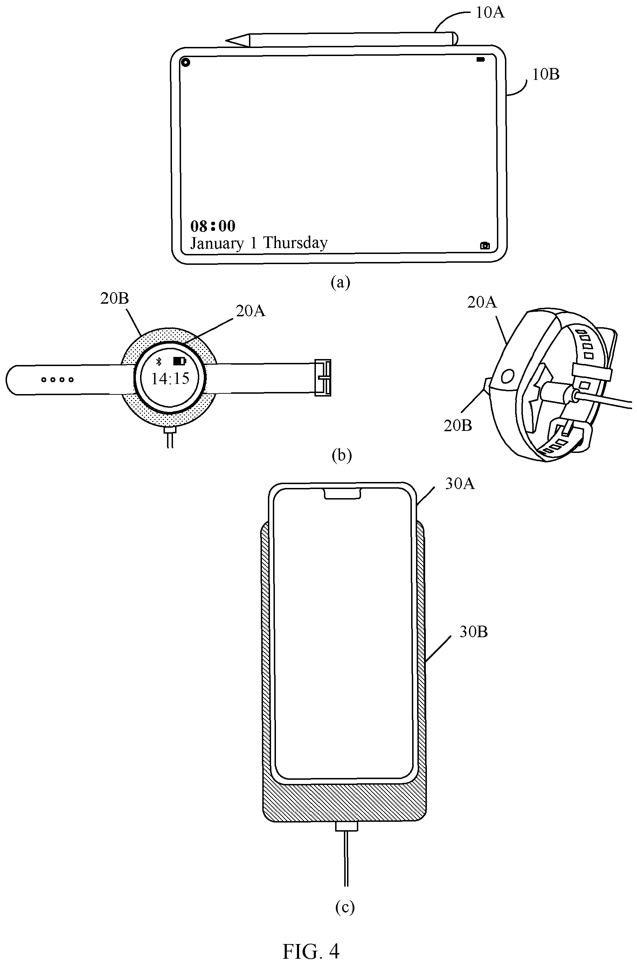

For example, as shown in (a) in FIG. 4, in a wireless charging system formed by an active stylus 10A and a tablet computer 10B, the tablet computer 10B is used as a wireless charging transmitting end device, to wirelessly charge the active stylus 10A as a wireless charging receiving end device. The magnetic isolation sheet provided in embodiments of this application may be used in the active stylus 10A, or may be used in the tablet computer 10B. This is not limited in the embodiments of this application.

For example, as shown in (b) in FIG. 4, in a wireless charging system formed by a smart band 20A and a wireless charging plate 20B, the wireless charging plate 20B is used as a wireless charging transmitting end device, to wirelessly charge the smart band 20A as a wireless charging receiving end device. The magnetic isolation sheet provided in embodiments of this application may be used in the smart band 20A, or may be used in the wireless charging plate 20B. This is not limited in the embodiments of this application. As shown in (b) in FIG. 4, a display of the smart band 20A may be circular or may be rectangular. This is not limited in the embodiments of this application.

For example, as shown in (c) in FIG. 4, in a wireless charging system formed by a mobile phone 30A and a wireless charging plate 30B, the wireless charging plate 30B is used as a wireless charging transmitting end device, to wirelessly charge the mobile phone 30A as a wireless charging receiving end device. This is not limited in the embodiments of this application. The magnetic isolation sheet provided in embodiments of this application may be used in the mobile phone 30A, or may be used in the wireless charging plate 30B.

It should be understood that the wireless charging transmitting end device may transfer electric energy of a battery of the wireless charging transmitting end device to the wireless charging receiving end device in a form of a near-field magnetic field, to wirelessly charge the wireless charging receiving end device, or may transfer electric energy of an external power supply to the wireless charging receiving end device in a form of a near-field magnetic field, to wirelessly charge the wireless charging receiving end device. This is not limited in the embodiments of this application.

For example, as shown in (a) in FIG. 4, the tablet computer 10B transfers electric energy of a battery of the tablet computer 10B to the active stylus 10A in a form of a near-field magnetic field, to wirelessly charge the active stylus 10A.

For example, as shown in (b) of FIG. 4, the wireless charging plate 20B transfers electric energy of an external power supply to the smart band 20A in a form of a near-field magnetic field, to wirelessly charge the smart band 20A.

For example, as shown in (c) of FIG. 4, the wireless charging plate 30B transfers electric energy of an external power supply to the mobile phone 30A in a form of a near-field magnetic field, to wirelessly charge the mobile phone 30A.

It should be understood that the above is an example of describing the application scenarios, and does not limit the application scenarios of this application.

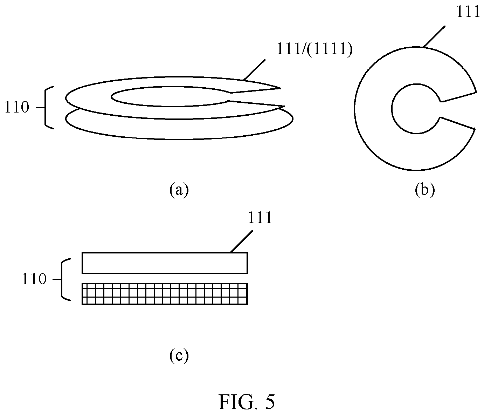

A magnetic isolation sheet provided in embodiments of this application is described in detail below with reference to FIG. 5 to FIG. 24.

FIG. 5 is a schematic diagram of a structure of a magnetic isolation sheet according to an embodiment of this application. (a) in FIG. 5 is a front view of the magnetic isolation sheet. (b) in FIG. 5 is a top view of a first nanocrystalline layer 111. (c) in FIG. 5 is a cross-sectional view of the magnetic isolation sheet. The magnetic isolation sheet is used in a coil module in a wireless charging device. The magnetic isolation sheet includes the first nanocrystalline layer 111. As shown in (a) in FIG. 5, the first nanocrystalline layer 111 includes a first region 1111. The first region 1111 is in a shape of a non-closed ring. The first region 1111 in the first nanocrystalline layer 111 is a nanocrystal on which magnetic crushing has not been performed.

It should be understood that the first nanocrystalline layer 111 includes the first region 1111. In a possible case, the first nanocrystalline layer 111 may further include another region. When the first nanocrystalline layer 111 includes only the first region 1111, the first nanocrystalline layer 111 and the first region 1111 are the same region.

It should be understood that the first region 1111 is a region of a non-closed ring, i.e., the first region 1111 is provided with a notch. The ring may be a circular ring, or may have another shape. This is not limited in embodiments of this application.

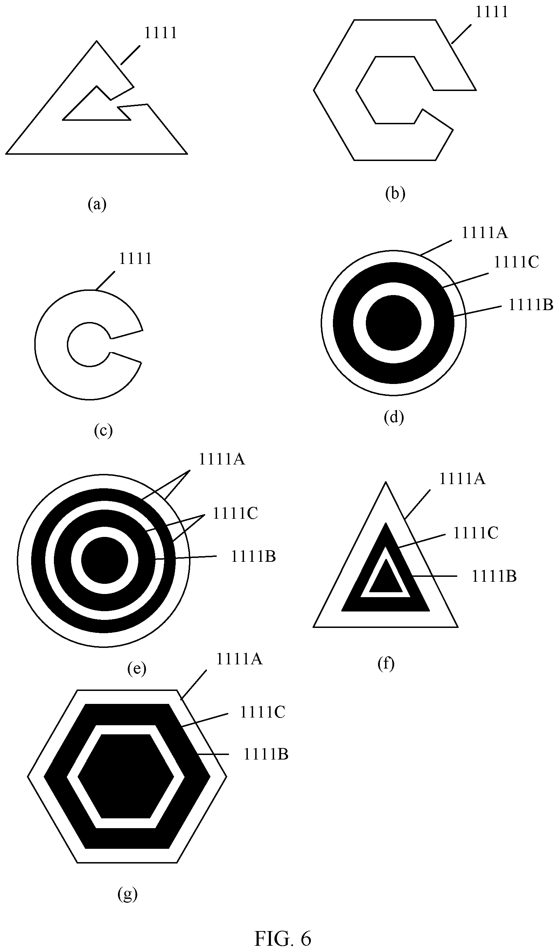

For example, as shown in (a) in FIG. 6, the first region 1111 may be a non-closed triangular ring.

For example, as shown in (b) in FIG. 6, the first region 1111 may be a non-closed hexagonal ring.

For example, as shown in (c) in FIG. 6, the first region 1111 may be a non-closed circular ring.

In a possible case, the first region 1111 may alternatively be a non-closed irregular ring. This is not limited in the embodiments of this application.

Optionally, the first region 1111 may alternatively be regions of at least two concentric rings. The at least two concentric rings include a first ring and a second ring. An inner diameter of the first ring is greater than an outer diameter of the second ring.

It should be understood that when the first region 1111 is regions of at least two concentric rings, the first region 1111 includes the regions of at least two concentric rings. The first region 1111 may be regions of two concentric rings, or may be regions of a plurality of concentric rings. This is not limited in the embodiments of this application. The regions of at least two concentric rings include a first ring and a second ring. When the regions of at least two concentric rings are regions of two concentric rings, the first ring may be a region of a ring on an outer side, and the second ring may be a region of a ring on an inner side. When the regions of at least two concentric rings are regions of more than two concentric rings, the first ring may be regions of a plurality of rings on an outer side, and the second ring may be a region of a ring on an inner side, or the first ring may be a region of one ring on an outermost side, and the second ring may be regions of a plurality of rings on an inner side. An inner diameter of the first ring is greater than an outer diameter of the second ring. in other words, a region of an empty ring is provided between the first ring and the second ring.

For example, as shown in (d) in FIG. 6, the first region 1111 may be regions of two concentric rings, including a first ring 1111A and a second ring 1111B, and a region 1111C of one empty ring is provided between the first ring 1111A and the second ring 1111B.

For example, as shown in (e) in FIG. 6, the first region 1111 may be regions of three concentric rings, including two first rings 1111A and one second ring 1111B, and regions 1111C of two empty rings are provided between the first ring 1111A and the second ring 1111B.

It should be understood that the regions of at least two concentric rings may alternatively be rings of another shape, for example, triangular rings and hexagonal rings.

For example, as shown in (f) in FIG. 6, the first region 1111 may be two concentric triangular rings. The two concentric triangular rings include one first ring 1111A and one second ring 1111B. An inner diameter of the first ring 1111A is greater than an outer diameter of the second ring 1111B.

For example, as shown in (g) in FIG. 6, the first region 1111 may be two concentric hexagonal rings. The two concentric hexagonal rings include one first ring 1111A and one second ring 1111B. An inner diameter of the first ring 1111A is greater than an outer diameter of the second ring 1111B.

In a possible case, a magnetic isolation sheet 110 may include a plurality of layers of nanocrystal. When the magnetic isolation sheet 110 includes a plurality of layers of nanocrystal, all nanocrystalline layers in the plurality of layers of nanocrystal may be the first nanocrystalline layer 111.

In a possible case, the magnetic isolation sheet 110 may include only one layer of nanocrystal, i.e., the first nanocrystalline layer 111. In this case, the magnetic isolation sheet 110 is the first nanocrystalline layer 111.

For example, as shown in (a) in FIG. 5, two magnetic isolation sheets 110 are provided, and include one first nanocrystalline layer 111.

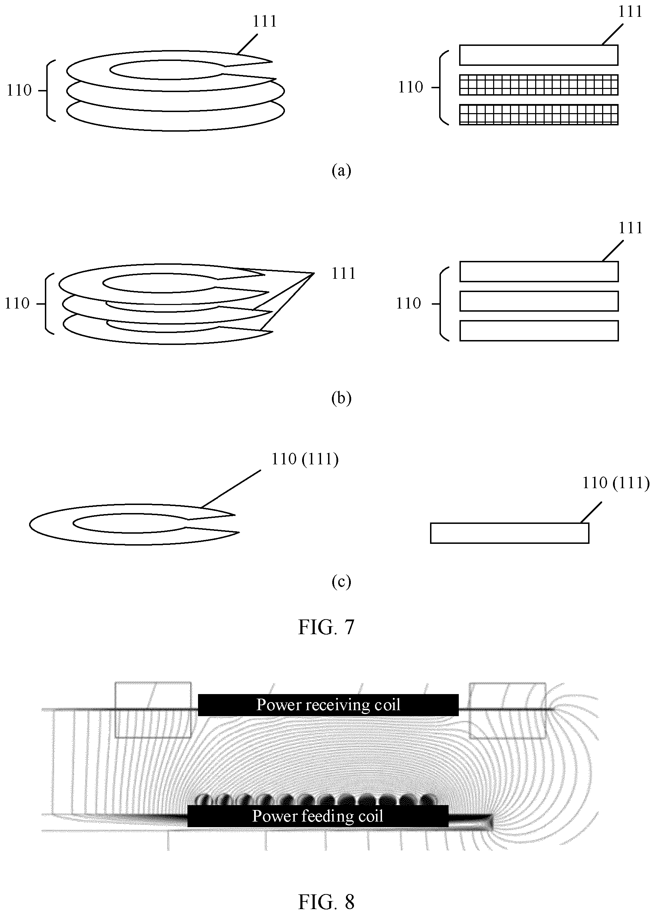

For example, as shown in (a) in FIG. 7, three magnetic isolation sheets 110 are provided, and include one first nanocrystalline layer 111.

For example, as shown in (b) in FIG. 7, three magnetic isolation sheets 110 are provided, and are all first nanocrystalline layers 111.

For example, as shown in (c) in FIG. 7, one magnetic isolation sheet 110 is provided. In this case, the magnetic isolation sheet 110 is the first nanocrystalline layer 111.

The foregoing describes the structure of the magnetic isolation sheet provided in the embodiments of this application. The following describes in detail the principle of how the magnetic isolation sheet provided in the embodiments of this application can avoid heating of the nanocrystal and improve wireless charging efficiency.

It should be understood that the magnetic isolation sheet is usually disposed below an induction coil. The induction coil may be a power feeding coil in a wireless charging transmitting end device, or the induction coil may be a power receiving coil in a wireless charging receiving end device. This is not limited in the embodiments of this application.

Descriptions are provided below by using an example in which the induction coil is the power receiving coil in the wireless charging receiving end device. When the wireless charging transmitting end device starts to feed power to the wireless charging receiving end device, both the power feeding coil in the wireless charging transmitting end device and the power receiving coil in the wireless charging receiving end device are in an energized state, and an induced magnetic field exists between the wireless charging transmitting end device and the wireless charging receiving end device.

For example, a schematic diagram of a magnetic field distribution of the induced magnetic field existing between the wireless charging transmitting end device and the wireless charging receiving end device may be shown in FIG. 8.

Between the power feeding coil and the power receiving coil, a magnetic field direction is parallel to a plane in which the power feeding coil is located and a plane in which the power receiving coil is located. In other words, a large change in magnetic flux does not occur between the power receiving coil and the power feeding coil. Therefore, a large eddy-current loss does not occur. A magnetic field perpendicular to the plane in which the power receiving coil is located exists at an edge portion of the power receiving coil, and these magnetic lines of force in the magnetic field generate a large change in magnetic flux. According to the magnetic isolation sheet provided in the embodiments of this application, the first region in the first nanocrystalline layer may be a region of a non-closed ring, i.e., a notch is provided in the first region. Through the notch, a change in magnetic flux when magnetic lines of force pass through the nanocrystal can be reduced, to avoid the change in magnetic flux generated due to magnetic lines of force at the edge portion of the power receiving coil, thereby avoiding an eddy-current loss caused by the change in magnetic flux. According to the magnetic isolation sheet provided in the embodiments of this application, the first region in the first nanocrystalline layer may be at least two concentric rings, i.e., a region of at least one empty ring is provided between the regions of at least two concentric rings in the first region. Through the region of the empty ring, a change in magnetic flux when magnetic lines of force pass through the nanocrystal can be reduced, to avoid the change in magnetic flux generated due to magnetic lines of force at the edge portion of the power receiving coil, thereby avoiding an eddy-current loss caused by the change in magnetic flux.

In this case, it is not necessary to perform magnetic crushing on the nanocrystal to reduce an eddy-current loss. Because magnetic crushing has not been performed on the nanocrystal in the magnetic isolation sheet, a saturation magnetic induction strength $B_S$ value and a magnetic permeability of the nanocrystal do not decrease, i.e., a mutual inductance of the power receiving coil of the wireless charging receiving end device do not decrease. Compared with the use of a nanocrystal obtained through magnetic crushing as a magnetic isolation sheet in the prior art, a mutual inductance of the power receiving coil using the magnetic isolation sheet provided in the embodiments of this application is higher than a mutual inductance of a power receiving coil in the prior art. Therefore, the wireless charging device using the magnetic isolation sheet provided in the embodiments of this application has high wireless charging efficiency.

The following describes the effect of improving the wireless charging efficiency of the wireless charging device by the magnetic isolation sheet provided in the embodiments of this application with reference to the accompanying drawings.

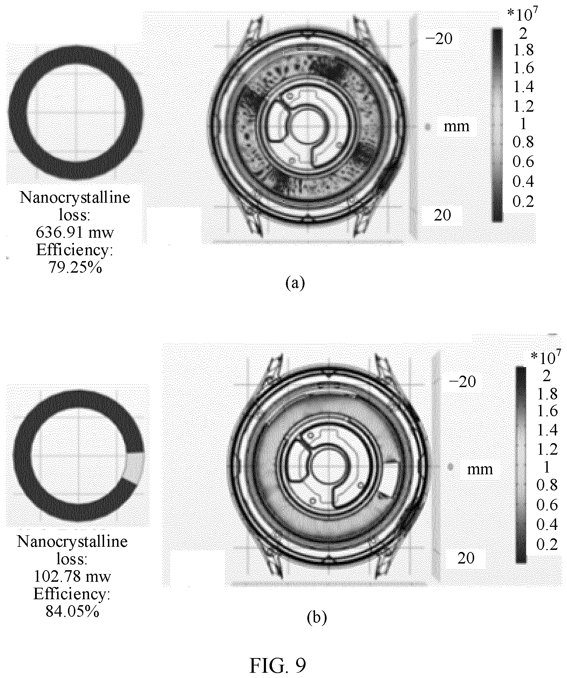

For example, FIG. 9 is a schematic diagram of magnetic field strength distributions on two different magnetic isolation sheets used in a smartwatch. (a) in FIG. 9 indicates that a plurality of layers of nanocrystal in the magnetic isolation sheet are nanocrystals on which magnetic crushing has been performed, and (b) in FIG. 9 indicates that the magnetic isolation sheet is the magnetic isolation sheet provided in the embodiments of this application. Compared with the magnetic isolation sheet in (a) in FIG. 9, for the magnetic isolation sheet in (b) in FIG. 9, a nanocrystalline layer in the magnetic isolation sheet in (b) in FIG. 9 is a region of a non-closed ring, and the magnetic isolation sheet in (a) in FIG. 9 is a ring. It can be seen that, for the magnetic isolation sheet in (a) in FIG. 9, a plurality of eddy-current losses exist on the magnetic isolation sheet, and for the magnetic isolation sheet in (b) in FIG. 9, no clear eddy-current loss exists on the magnetic isolation sheet. In other words, through the use of the magnetic isolation sheet shown in (b) in FIG. 9, an eddy-current loss on the magnetic isolation sheet can be avoided.

Further, for the magnetic isolation sheet in (a) in FIG. 9, a nanocrystal loss is 636.91 mW, and the charging efficiency of the wireless charging device using the magnetic isolation sheet is 79.25%. For the magnetic isolation sheet in (b) in FIG. 9, a nanocrystal loss is 102.78 mW, and the charging efficiency of the wireless charging device using the magnetic isolation sheet is 84.05%. It can be seen that when the magnetic isolation sheet shown in (b) in FIG. 9 is used, a nanocrystal loss on the magnetic isolation sheet is greatly reduced. In this case, the efficiency of the wireless charging device is clearly improved.

The magnetic isolation sheet provided in the embodiments of this application is used in the coil module in the wireless charging device. The magnetic isolation sheet includes the first nanocrystalline layer. The first nanocrystalline layer includes the first region in the shape of a non-closed ring. The material of the first region is a nanocrystal on which magnetic crushing has not been performed. Because the first region is in the shape of a non-closed ring, i.e., the first region is provided with a notch penetrating the first region, through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region in the first nanocrystalline layer is a nanocrystal on which magnetic crushing has not been performed. In this case, a saturation magnetic induction strength $B_S$ value and a magnetic permeability of the first nanocrystalline layer do not decrease, and in this case, do not cause a decrease in charging efficiency of the wireless charging device in which the magnetic isolation sheet is used. In summary, the magnetic isolation sheet provided in the embodiments of this application can improve wireless charging efficiency while avoiding nanocrystal heating during wireless charging.

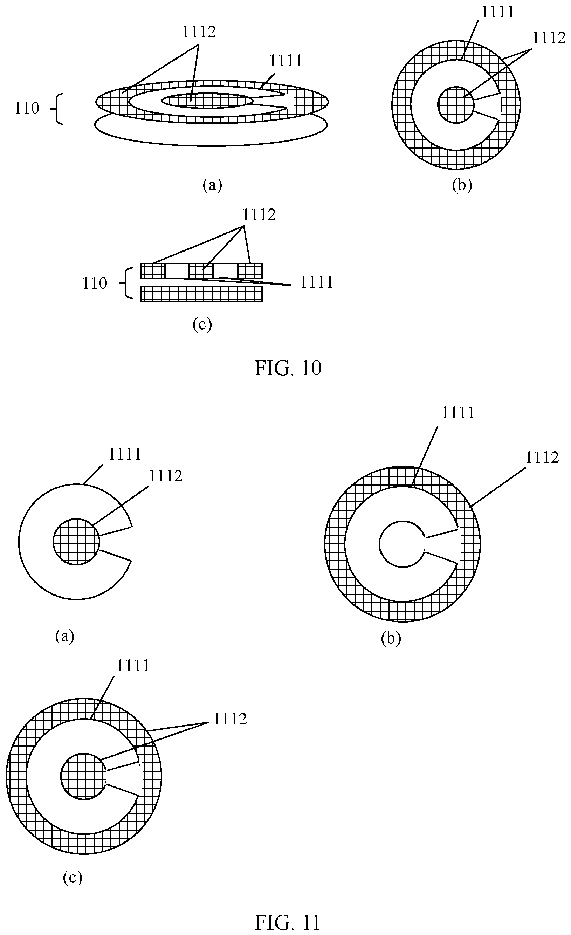

In a possible case, a second region is further included at a periphery of the first region in the first nanocrystalline layer, and the first nanocrystalline layer is a nanocrystal treated in the second region. Details are described below with reference to embodiments shown in FIG. 10 to FIG. 13.

FIG. 10 is a schematic diagram of a magnetic isolation sheet according to another embodiment of this application.

(a) in FIG. 10 is a front view of the magnetic isolation sheet according to this embodiment of this application. (b) in FIG. 10 is a top view of the magnetic isolation sheet according to this embodiment of this application. (c) in FIG. 10 is a side view of the magnetic isolation sheet according to this embodiment of this application. As shown in FIG. 10, the magnetic isolation sheet 110 includes a first nanocrystalline layer 111. As shown in (b) in FIG. 10, the first nanocrystalline layer includes a first region 1111 and a second region 1112. The first region 1111 is a region of a non-closed ring, and the second region 1112 is on an inner side and an outer side of the first region 1111. The first region 1111 in the first nanocrystalline layer 111 is a nanocrystal on which magnetic crushing has not been performed, and the second region 1112 in the first nanocrystalline layer 111 is a nanocrystal on which magnetic crushing has been performed.

The second region 1112 is on the inner side of the first region 1111, or the second region 1112 is on the outer side of the first region 1111, or the second region 1112 is on the inner side and the outer side of the first region 1111. The second region 1112 shown in FIG. 10 is merely an example.

For example, as shown in (a) in FIG. 11, the second region 1112 may be only on the inner side of the first region 1111.

For example, as shown in (b) in FIG. 11, the second region 1112 may be only on the outer side of the first region 1111.

For example, as shown in (c) in FIG. 11, the second region 1112 may be on the inner side and the outer side of the first region 1111.

It should be understood that the second region 1112 and the first region 1111 may have the same ring or may have different rings. This is not limited in embodiments of this application.

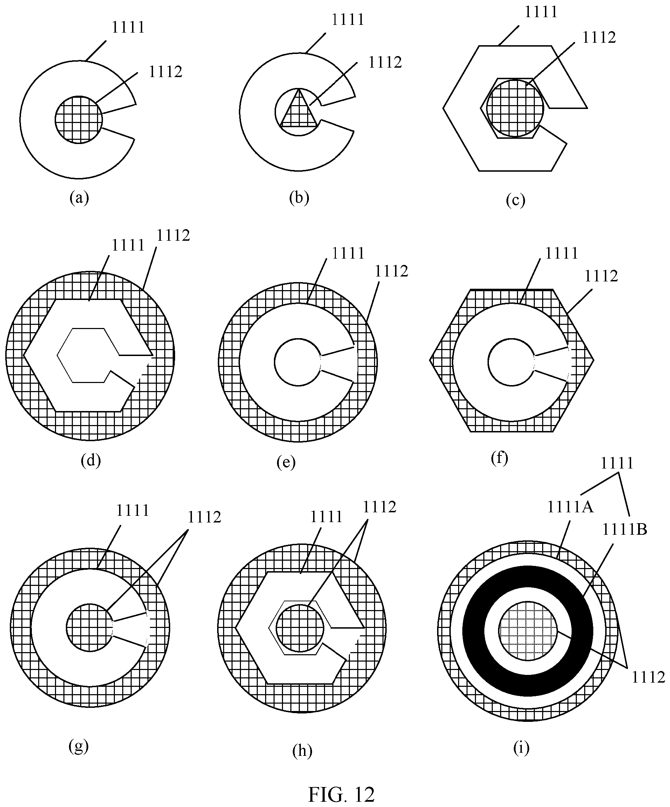

For example, as shown in (a) in FIG. 12, the first region 1111 is a non-closed circular ring, the second region 1112 is on the inner side of the first region 1111, and the second region 1112 is also circular.

For example, as shown in (b) in FIG. 12, the first region 1111 is a non-closed circular ring, the second region 1112 is on the inner side of the first region 1111, and the second region 1112 is triangular.

For example, as shown in (c) in FIG. 12, the first region 1111 is a non-closed hexagonal ring, the second region 1112 is on the inner side of the first region 1111, and the second region 1112 is circular.

For example, as shown in (d) in FIG. 12, the first region 1111 is a non-closed hexagonal ring, the second region 1112 is on the outer side of the first region 1111, and the second region 1112 is a circular ring.

For example, as shown in (e) in FIG. 12, the first region 1111 is a non-closed circular ring, the second region 1112 is on the outer side of the first region 1111, and the second region 1112 is a circular ring.

For example, as shown in (f) in FIG. 12, the first region 1111 is a non-closed circular ring, the second region 1112 is on the outer side of the first region 1111, and the second region 1112 is a hexagonal ring.

For example, as shown in (g) in FIG. 12, the first region 1111 is a non-closed circular ring, and the second region 1112 is on the inner side and the outer side of the first region 1111. On the inner side of the first region 1111, the second region 1112 is circular, and on the outer side of the first region, the second region 1112 is a circular ring.

For example, as shown in (h) in FIG. 12, the first region 1111 is a non-closed hexagonal ring, the second region 1112 is on the inner side and the outer side of the first region 1111. On the inner side of the first region 1111, the second region 1112 is circular, and on the outer side of the first region, the second region 1112 is a circular ring.

For example, as shown in (i) in FIG. 12, the first region 1111 includes a first ring 1111A and a second ring 1111B. The second region 1112 is on the inner side and the outer side of the first region 1111. On the inner side of the first region 1111, the second region 1112 is circular. On the outer side of the first region, the second region 1112 is a circular ring.

It should be understood that, in an edge region of the magnetic isolation sheet shown in FIG. 5, magnetic lines of force perpendicular to a plane in which a power receiving coil is located exist in an edge portion of the magnetic isolation sheet. As shown in FIG. 8, these magnetic lines of force generate a large change in magnetic flux, which easily causes an eddy-current loss. Therefore, the second region 1112 may be added to the first nanocrystalline layer 111 based on the magnetic isolation sheet shown in FIG. 5, and the first nanocrystalline layer 111 is a nanocrystal on which magnetic crushing has been performed in the second region 1112. The second region 1112 is located on the inner side and/or the outer side of the first region 1111, in other words, the second region 1112 is located in an edge portion of the first region 1111. Because the first nanocrystalline layer 111 is a nanocrystal on which magnetic crushing has been performed on the second region 1112, this is equivalent to that a nanocrystal on which magnetic crushing has been performed is newly added to the edge region of the magnetic isolation sheet shown in FIG. 5, and the newly added nanocrystal (equivalent to the second region 1112) on which magnetic crushing has been performed can effectively reduce an eddy-current loss generated in the edge region due to a change in magnetic flux, i.e., avoid heating of the magnetic isolation sheet caused by a large eddy-current loss.

The magnetic isolation sheet provided in the embodiments of this application is used in a coil module in a wireless charging device, and includes at least one layer of nanocrystal. The at least one layer of nanocrystal includes the first nanocrystalline layer. The first nanocrystalline layer includes the first region and the second region. The first region is a region of a non-closed ring. The second region is on the inner side and/or the outer side of the first region. A nanocrystal on which magnetic crushing has not been performed is provided in the first region in the first nanocrystalline layer, a nanocrystal on which magnetic crushing has been performed is provided in the second region. In this case, this is equivalent to that a nanocrystal on which magnetic crushing has been performed is added to an edge region of the first region, and through the nanocrystal on which magnetic crushing has been performed in the edge region of the first region, an eddy-current loss generated in the edge region of the first region due to a change in magnetic flux is reduced, thereby further avoiding heating of the magnetic isolation sheet due to the eddy-current loss.

Optionally, the second region 1112 and the first region 1111 are adjacent to each other.

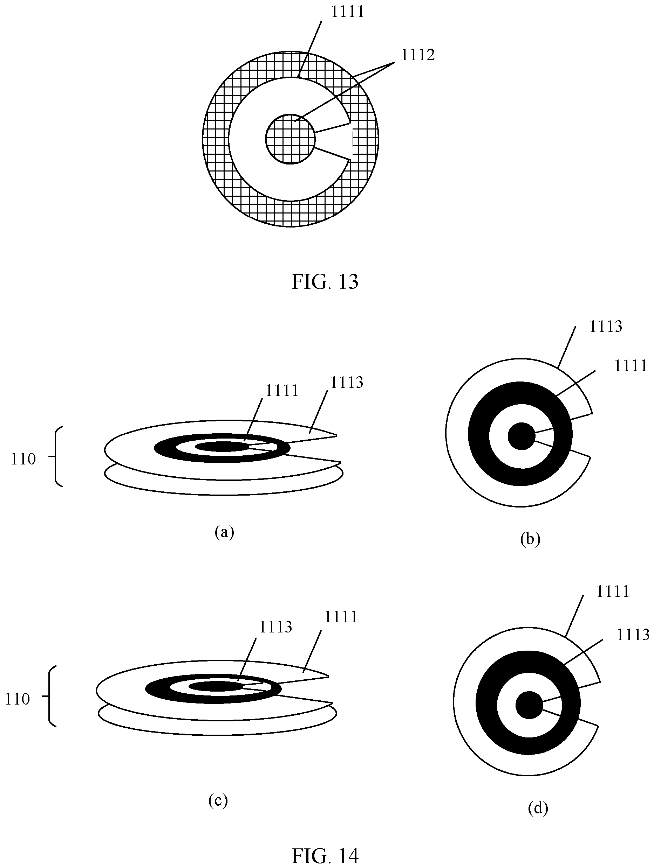

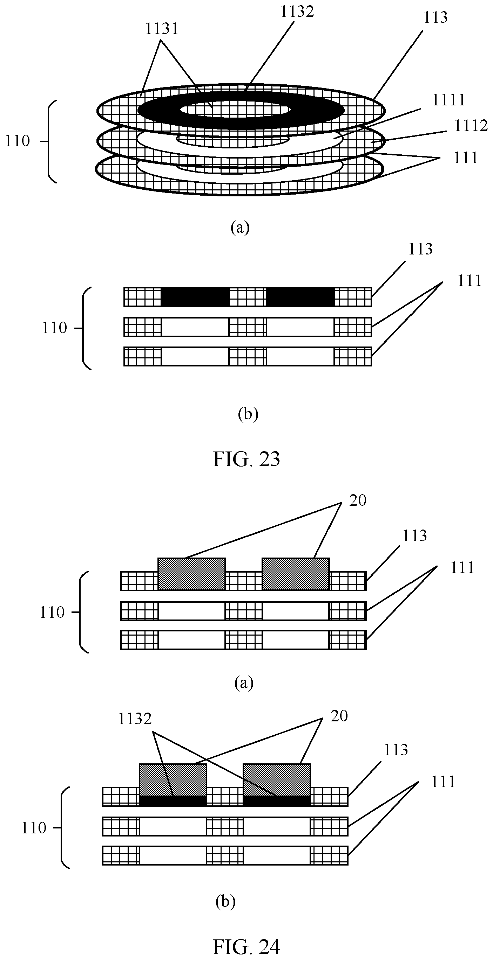

For example, as shown in FIG. 13, the first region 1111 is a non-closed circular ring, and the second region 1112 is on the inner side and the outer side of the first region 1111. On the inner side of the first region 1111, the second region 1112 is a circular region, and on the outer side of the first region, the second region 1112 is a region of a circular ring. The circular region on the inner side of the first region 1111 and the region of the circular ring on the outer side of the first region 1111 are both connected to the first region 1111. In this case, this is equivalent to that the edge regions of the first region 1111 are all provided with a nanocrystal on which magnetic crushing has been performed.

The magnetic isolation sheet provided in the embodiments of this application is used in the coil module in the wireless charging device, and includes at least one layer of nanocrystal. The at least one layer of nanocrystal includes the first nanocrystalline layer. The first nanocrystalline layer includes the first region and the second region. The first region is a region of a non-closed ring. The second region is on the inner side and/or the outer side of the first region. The first region and the second region are connected. The first region in the first nanocrystalline layer is made of a nanocrystal on which magnetic crushing has not been performed. The second region is made of a nanocrystal on which magnetic crushing has been performed. Because the first region and the second region are connected, in this case, a nanocrystal on which magnetic crushing has been performed can be added to the edge region of the first region, and through the nanocrystal on which magnetic crushing has been performed in the edge region of the first region, an eddy-current loss generated due to a change in magnetic flux is reduced, thereby further avoiding heating of the magnetic isolation sheet due to the eddy-current loss.

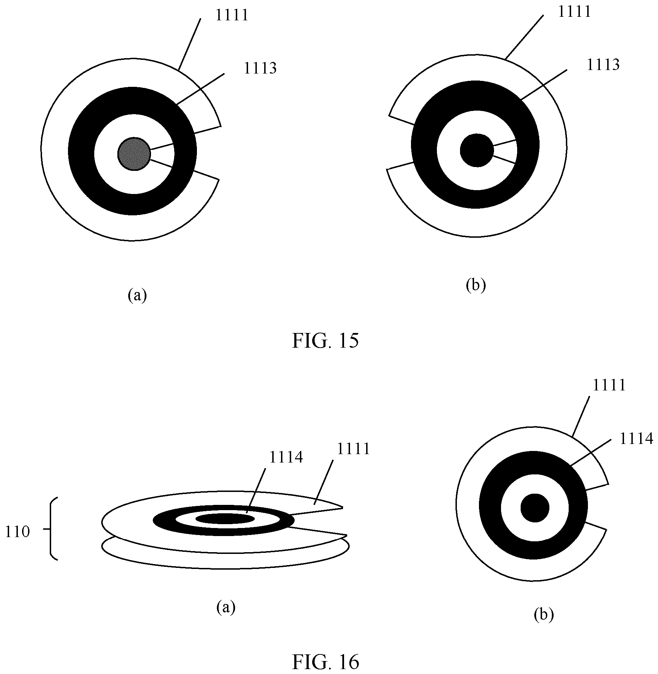

In a possible case, the first nanocrystalline layer further includes a third region, and a material of the third region is also an untreated nanocrystal. Details are described below with reference to embodiments shown in FIG. 14 and FIG. 15.

FIG. 14 is a schematic diagram of a magnetic isolation sheet according to another embodiment of this application. (a) in FIG. 14 is a front view of the magnetic isolation sheet according to this embodiment of this application. (b) in FIG. 14 is a top view of the magnetic isolation sheet according to this embodiment of this application. As shown in FIG. 14, the magnetic isolation sheet 110 includes a first nanocrystalline layer 111. The first nanocrystalline layer includes a first region 1111 and a third region 1113 disposed concentric with the first region 1111. The first region 1111 is a region of a non-closed ring. The third region 1113 is a region of a non-closed ring. A material of the first region 1111 and a material of the third region 1113 are both nanocrystals on which magnetic crushing has not been performed.

The third region 1113 may be located on an inner side of the first region 1111, or may be located on an outer side of the first region 1111. This is not limited in embodiments of this application.

For example, as shown in (a) in FIG. 14 and (b) in FIG. 14, the third region 1113 may be on the outer side of the first region 1111.

For example, as shown in (c) in FIG. 14 and (d) in FIG. 14, the third region 1113 may be on the inner side of the first region 1111.

Because a shape of the third region 1113 is a non-closed ring, the third region 1113 is provided with a notch penetrating an inner diameter and an outer diameter. Similarly, a shape of the first region 1111 is also a non-closed ring, and therefore, the first region 1111 is also provided with a notch penetrating the inner diameter and the outer diameter.

A shape of the notch in the first region 1111 and a shape of the notch in the third region 1113 may be the same, or may be different. This is not limited in the embodiments of this application.

A position of the notch in the first region 1111 and a position of the notch in the third region 1113 may be the same, or may be different. This is not limited in the embodiments of this application.

For example, as shown in (a) in FIG. 15, the notch in the first region 1111 is on a right side of the first region 1111, and the notch in the third region 1113 is also on a right side of the third region 1113. The position of the notch in the first region 1111 is the same as the position of the notch in the third region 1113.

For example, as shown in (b) in FIG. 15, the notch in the first region 1111 is on a left side of the first region 1111, and the notch in the third region 1113 is on a right side of the third region 1113. The position of the notch in the first region 1111 is different from the position of the notch in the third region 1113.

The magnetic isolation sheet provided in the embodiments of this application is used in a coil module in a wireless charging device. The magnetic isolation sheet includes the first nanocrystalline layer. The first nanocrystalline layer includes the first region in a shape of a non-closed ring and the third region disposed concentric with the first region. The shape of the third region is also a non-closed ring. The materials of the first region and the third region are a nanocrystal on which magnetic crushing has not been performed. Because the first region and the third region are in the shape of a non-closed ring, i.e., each of the first region and the third region is provided with the notch penetrating the first region, through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region and the third region in the first nanocrystalline layer are both nanocrystals on which magnetic crushing has not been performed. In this case, a saturation magnetic induction strength $Bs$ value and a magnetic permeability of the first nanocrystalline layer do not decrease, and in this case, do not cause a decrease in charging efficiency of the wireless charging device in which the magnetic isolation sheet is used. In summary, the magnetic isolation sheet provided in the embodiments of this application can improve wireless charging efficiency while avoiding nanocrystal heating during wireless charging.

In a possible case, the first nanocrystalline layer further includes a fourth region, and a material of the fourth region is also an untreated nanocrystal. Details are described below with reference to the embodiment shown in FIG. 16.

FIG. 16 is a schematic diagram of a magnetic isolation sheet according to another embodiment of this application. (a) in FIG. 16 is a front view of the magnetic isolation sheet according to this embodiment of this application. (b) in FIG. 16 is a top view of the magnetic isolation sheet according to this embodiment of this application. As shown in FIG. 16, the magnetic isolation sheet 110 includes a first nanocrystalline layer 111. The first nanocrystalline layer includes a first region 1111 and a fourth region 1114 disposed concentric with the first region 1111. A shape of the first region 1111 is a non-closed ring. A shape of the fourth region 1114 is a closed ring. An outer diameter of the fourth region 1114 is less than an inner diameter of the first region 1111. A material of the first region 1111 and a material of the fourth region 1114 are both nanocrystals on which magnetic crushing has not been performed.

It should be understood that when the outer diameter of the fourth region 1114 is less than the inner diameter of the first region 1111, in other words, the fourth region 1114 is on an inner side of the first region 1111.

When the fourth region 1114 is on the inner side of the first region 1111, this is equivalent to that a notch is provided on an outer side (the first region 1111) of the first nanocrystalline layer 111. Through the notch on the outer side of the first nanocrystalline layer 111, a change in magnetic flux when magnetic lines of force in a magnetic field pass through the nanocrystal can be avoided, thereby avoiding an eddy-current loss caused by the change in magnetic flux.

The magnetic isolation sheet provided in the embodiments of this application is used in a coil module in a wireless charging device. The magnetic isolation sheet includes the first nanocrystalline layer. The first nanocrystalline layer includes the first region in a shape of a non-closed ring and the fourth region disposed concentric with the first region. The shape of the fourth region is a closed ring. The outer diameter of the fourth region is less than the inner diameter of the first region, this is equivalent to that the first region is on an outer side of the fourth region. The materials of the first region and the fourth region are a nanocrystal on which magnetic crushing has not been performed. Because the shape of the first region is a non-closed ring and the first region is on the outer side of the fourth region, in this case, this is equivalent to that a notch is provided on the outer side of the first nanocrystalline layer. Through the notch, a change in magnetic flux when magnetic lines of force in a magnetic field pass through the nanocrystal can be avoided, so that an eddy-current loss caused by the change in magnetic flux is avoided, i.e., the heating of a nanocrystalline material during wireless charging is avoided. In addition, when the first nanocrystalline layer avoids nanocrystal heating during wireless charging, the first region and the fourth region in the first nanocrystalline layer are both nanocrystals on which magnetic crushing has not been performed. In this case, a saturation magnetic induction strength $B_S$ value and a magnetic permeability of the first nanocrystalline layer do not decrease, and in this case, do not cause a decrease in charging efficiency of the wireless charging device in which the magnetic isolation sheet is used. In summary, the magnetic isolation sheet provided in the embodiments of this application can improve wireless charging efficiency while avoiding nanocrystal heating during wireless charging.

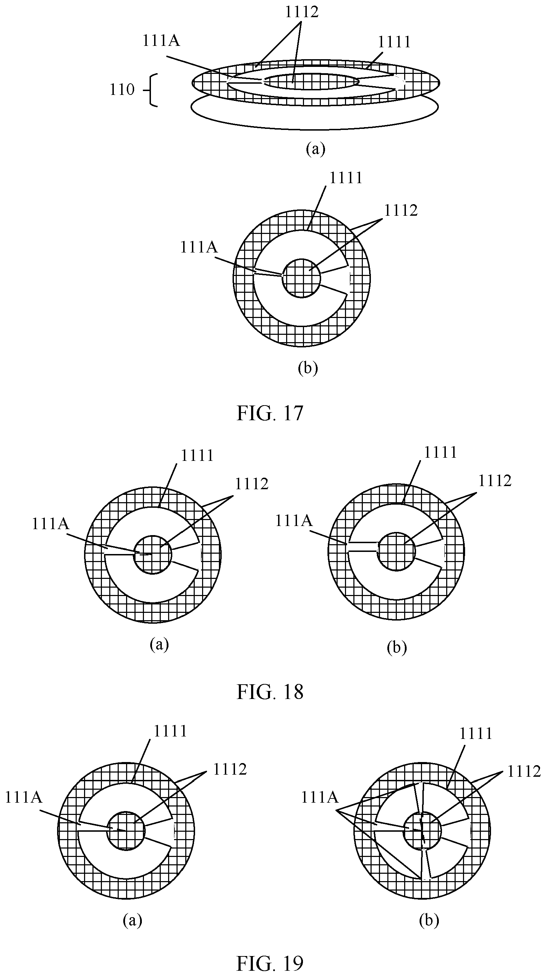

In a possible case, when a size of an electronic device in which the magnetic isolation sheet is used is large, for example, the magnetic isolation sheet is used in a mobile phone, because a battery capacity of the mobile phone is usually large, a size of the used magnetic isolation sheet is large correspondingly. When the size of the magnetic isolation sheet is larger, an eddy-current loss on the magnetic isolation sheet is larger. Based on this, a notch may be added to the first region, to reduce heating of the magnetic isolation sheet due to an eddy-current loss. Details are described below with reference to embodiments shown in FIG. 17 to FIG. 20.

FIG. 17 is a schematic diagram of a magnetic isolation sheet according to another embodiment of this application. (a) in FIG. 17 is a front view of the magnetic isolation sheet according to this embodiment of this application. (b) in FIG. 17 is a top view of the magnetic isolation sheet according to this embodiment of this application. As shown in FIG. 17, the magnetic isolation sheet includes at least one layer of nanocrystal 110. The at least one layer of nanocrystal 110 includes a first nanocrystalline layer 111. As shown in (b) in FIG. 17, the first nanocrystalline layer includes a first region 1111 and a second region 1112. The first region 1111 is a region of a non-closed ring. The first region 1111 includes at least one first notch 111A. The second region 1112 is at a periphery of the first region 1111. The first region 1111 in the first nanocrystalline layer 111 is a nanocrystal on which magnetic crushing has not been performed, and the second region 1112 in the first nanocrystalline layer 111 is a nanocrystal on which magnetic crushing has been performed.

It should be understood that the first notch 111A is a notch that is in the first region 1111 and that penetrates an inner diameter and an outer diameter.

For example, as shown in (a) in FIG. 18, the first notch 111A may be a region in which two straight lines that radiate outward from the center of circle being the center of circle of the region of the ring in which the first region 1111 is located intersect with the first region.

For example, as shown in (b) in FIG. 18, the first notch 111A may be rectangular.

A shape of the first notch 111A is not limited in embodiments of this application, provided that the first notch 111A can penetrate the inner diameter and the outer diameter of the first region 1111.

One or more first notches 111A may be provided. This is not limited in the embodiments of this application.

For example, as shown in (a) in FIG. 19, one first notch 111A is provided.

For example, as shown in (b) in FIG. 19, three first notches 111A are provided.

It should be understood that the first notch 111A may be disposed at any position of the first region. This is not limited in the embodiments of this application, provided that the first notch 111A can penetrate the inner diameter and the outer diameter of the first region 1111.

When the size of the magnetic isolation sheet is large, based on the embodiments shown in FIG. 5 to FIG. 13, the notch is added to the first region, so that a magnetic field that is between a wireless charging transmitting end device and a wireless charging receiving end device and that is perpendicular to a plane in which a power receiving coil is located can be released through the notch in the first region, to reduce an eddy-current loss on the magnetic isolation sheet, thereby avoiding heating of the magnetic isolation sheet due to a large eddy-current loss.

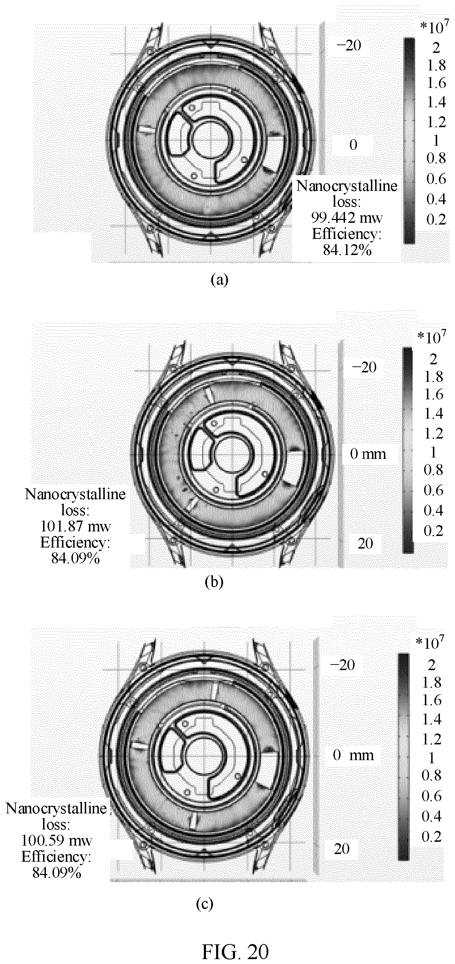

The following describes, with reference to FIG. 20, an effect of the magnetic isolation sheet with the first notch added to the first region.

For example, FIG. 20 is a schematic diagram of magnetic field strength distributions on three magnetic isolation sheets used in a smartwatch.

(a) in FIG. 20 is a diagram of a magnetic field strength distribution of a magnetic isolation sheet with one first notch 111A newly added to the first region 1111. (b) in FIG. 20 is a diagram of a magnetic field strength distribution of a magnetic isolation sheet with two first notches 111A newly added to the first region 1111. (c) in FIG. 20 is a diagram of a magnetic field strength distribution of a magnetic isolation sheet with three first notches 111A newly added to the first region 1111.

It can be known from FIG. 20 that, when one first notch 111A is newly added to the first region 1111, an eddy-current loss is reduced, a nanocrystalline loss is 99.442 mW, and the efficiency of a wireless charging device is 84.12%. When two first notches 111A are newly added to the first region 1111, the eddy-current loss is reduced, the nanocrystalline loss is 101.87 mW, and the efficiency of the wireless charging device is 84.09%. When one first notch 111A is newly added to the first region 1111, the eddy-current loss is reduced, the nanocrystalline loss is 100.59 mW, and the efficiency of the wireless charging device is 84.09%.

The magnetic isolation sheet provided in the embodiments of this application may be used in a coil module in the wireless charging device, and includes at least one layer of nanocrystal. The at least one layer of nanocrystal includes the first nanocrystalline layer. The first nanocrystalline layer includes the first region and the second region. The first region is a region of a non-closed ring. The second region is on an inner side and/or an outer side of the first region. The first region and the second region are connected. The first region in the first nanocrystalline layer is made of a nanocrystal on which magnetic crushing has not been performed. The second region is made of a nanocrystal on which magnetic crushing has been performed. When a size of the magnetic isolation sheet is greater than a preset threshold, the first region includes at least one first notch. Because the first region is a region of a non-closed ring, the first region including the at least one first notch is equivalent to that two or more notches are provided in the region of a ring. The two or more notches are respectively a notch that makes the region of a ring non-closed and the at least one first notch provided in the first region. For example, when the first region includes one first notch, this is equivalent to that two notches are provided in the first nanocrystalline layer, and are respectively a notch that makes the region of the ring non-closed and one first notch. For example, when the first region includes two first notches, this is equivalent to that three notches are provided in the first nanocrystalline layer, and are respectively a notch that makes the region of the ring non-closed and two first notches. In this case, a magnetic field that is between a wireless charging transmitting end device and a wireless charging receiving end device and that is perpendicular to a plane in which a power receiving coil is located can be released through the notch in the first region, to reduce an eddy-current loss on the magnetic isolation sheet, thereby avoiding the eddy-current loss caused by a large size of the magnetic isolation sheet, and further avoiding heating of the magnetic isolation sheet due to a large eddy-current loss.

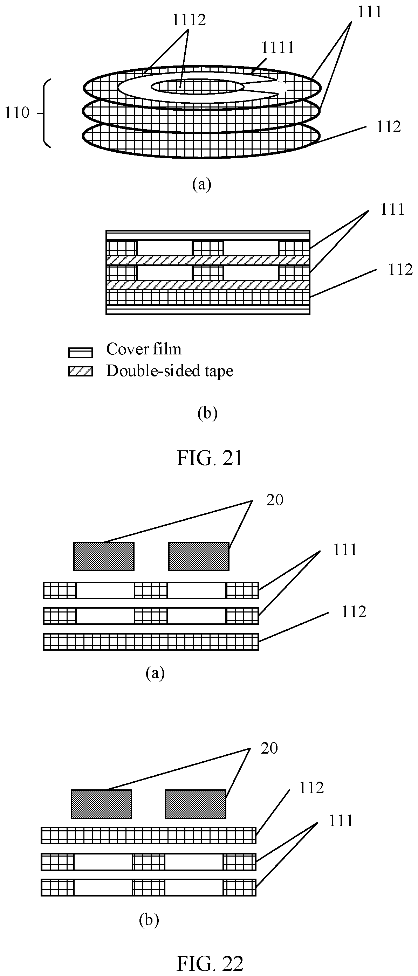

The foregoing embodiments focus on a specific case of a nanocrystalline layer on a magnetic isolation sheet. Usually, the magnetic isolation sheet may include a plurality of the nanocrystalline layers. The structures of the nanocrystalline layers may be the same or different. This is not limited in the embodiments of this application. Specific cases of different structures of the nanocrystalline layers are described in detail below with reference to embodiments shown in FIG. 21 to FIG. 24.

FIG. 21 is a schematic diagram of a magnetic isolation sheet according to another embodiment of this application. (a) in FIG. 21 is a front view of the magnetic isolation sheet. (b) in FIG. 21 is a cross-sectional view of the magnetic isolation sheet. The magnetic isolation sheet is used in a coil module in a wireless charging device. The magnetic isolation sheet includes at least one layer of nanocrystal 110. The at least one layer of nanocrystal 110 includes a first nanocrystalline layer 111 and a second nanocrystalline layer 112. As shown in (b) in FIG. 21, the first nanocrystalline layer includes a first region 1111 and a second region 1112. The first region 1111 is a region of a non-closed ring, and the second region 1112 is on an inner side and an outer side of the first region 1111. The first region 1111 in the first nanocrystalline layer 111 is a nanocrystal on which magnetic crushing has not been performed, and the second region 1112 in the first nanocrystalline layer 111 is a nanocrystal on which magnetic crushing has been performed. The second nanocrystalline layer 112 is a nanocrystal on which magnetic crushing has been performed.

It should be understood that, the magnetic isolation sheet usually includes a plurality of layers of nanocrystal. The structures of the layers of nanocrystal may be the same or different. This is not limited in embodiments of this application. For example, the magnetic isolation sheet shown in FIG. 21 includes three layers of nanocrystal, of which two layers are first nanocrystalline layers 111 and one layer is the second nanocrystalline layer 112. The layers of nanocrystal may be connected by a double-sided tape, or may be bonded by another adhesive material. This is not limited in the embodiments of this application. One cover film may be respectively disposed above and below the magnetic isolation sheet.

It should be understood that the at least one layer of nanocrystal 110 in the magnetic isolation sheet is usually stacked. Therefore, the first nanocrystalline layer 111 is usually disposed above or below the second nanocrystalline layer 112. This is not limited in the embodiments of this application.

Optionally, a projection of the first nanocrystalline layer 111 and a projection of the second nanocrystalline layer 112 overlap.

The magnetic isolation sheet provided in the embodiments of this application includes at least one layer of nanocrystal. The at least one layer of nanocrystal includes the first nanocrystalline layer and the second nanocrystalline layer. The first nanocrystalline layer includes the first region. The first region is a region of a non-closed ring. The first region on the first nanocrystalline layer is made of a nanocrystal on which magnetic crushing has not been performed. The second nanocrystalline layer is made of a nanocrystal on which magnetic crushing has been performed. Because the first region on the first nanocrystalline layer is a region of a non-closed ring, a manufacturing process of the first nanocrystalline layer is relatively complex, and a manufacturing process of the second nanocrystalline layer is relatively simple. In the embodiments of this application, the second nanocrystalline layer with a relatively simple manufacturing process is used as a nanocrystalline layer in the at least one layer of nanocrystal, so that the difficulty of manufacturing the magnetic isolation sheet can be reduced.

It should be understood that, the magnetic isolation sheet is usually combined with an induction coil as the coil module in the wireless charging device.

For example, the magnetic isolation sheet is combined with a power feeding coil for use as a coil module in a wireless charging transmitting end device.

For example, the magnetic isolation sheet is combined with a power receiving coil for use as the coil module in a wireless charging receiving end device.

In other words, the induction coil is usually disposed above the magnetic isolation sheet. The second nanocrystalline layer 112 may be disposed above the first nanocrystalline layer 111, or may be disposed below the first nanocrystalline layer. This is not limited in the embodiments of this application.

Optionally, a distance between the second nanocrystalline layer 112 and the induction coil 20 is greater than a distance between the first nanocrystalline layer 111 and the induction coil 20.

For example, as shown in (a) in FIG. 22, the magnetic isolation sheet includes three layers of nanocrystal, of which two layers are first nanocrystalline layers 111 and one layer is the second nanocrystalline layer 112. The magnetic isolation sheet is disposed below the induction coil 20. The distance between the second nanocrystalline layer 112 and the induction coil 20 is greater than the distance between the first nanocrystalline layer 111 and the induction coil 20. In other words, the second nanocrystalline layer 112 is below the first nanocrystalline layer 111.

Optionally, a distance between the second nanocrystalline layer 112 and the induction coil 20 is less than a distance between the first nanocrystalline layer 111 and the induction coil 20.

For example, as shown in (b) in FIG. 22, the magnetic isolation sheet includes three layers of nanocrystal, of which two layers are first nanocrystalline layers 111 and one layer is the second nanocrystalline layer 112. The magnetic isolation sheet is disposed below the induction coil 20. The distance between the second nanocrystalline layer 112 and the induction coil 20 is less than the distance between the first nanocrystalline layer 111 and the induction coil 20. In other words, the second nanocrystalline layer 112 is above the first nanocrystalline layer 111.

The magnetic isolation sheet provided in the embodiments of this application is used in the coil module in the wireless charging device. The magnetic isolation sheet includes the first nanocrystalline layer and the second nanocrystalline layer. The second nanocrystalline layer is made of a nanocrystal on which magnetic crushing has been performed, and the distance between the second nanocrystalline layer and the induction coil in the coil module is less than the distance between the first nanocrystalline layer and the induction coil. In this case, a change in magnetic flux generated when the induction coil operates can be absorbed by the second nanocrystalline layer that is closer to the induction coil, thereby further avoiding an eddy-current loss on the magnetic isolation sheet, so that while wireless charging efficiency is improved through the first nanocrystalline layer, heating generated due to the eddy-current loss on the magnetic isolation sheet is further avoided.

When another nanocrystalline layer is disposed above the first nanocrystalline layer 111, because the first region 1111 in the first nanocrystalline layer 111 is made of a nanocrystal on which magnetic crushing has not been performed, and the magnetic isolation sheet has a high saturation magnetic induction feature in the first region 1111, a nanocrystalline layer does not need to be used to reduce an eddy-current loss above the first region 1111, i.e., the induction coil may be directly placed above the first region 1111. The following provides a detailed description based on the embodiment shown in FIG. 23.

FIG. 23 is a schematic diagram of a magnetic isolation sheet according to another embodiment of this application. (a) in FIG. 23 is a front view of the magnetic isolation sheet. (b) in FIG. 23 is a cross-sectional view of the magnetic isolation sheet. The magnetic isolation sheet is used in a coil module in a wireless charging device. The magnetic isolation sheet includes at least one layer of nanocrystal 110. The at least one layer of nanocrystal 110 includes a first nanocrystalline layer 111 and a third nanocrystalline layer 113. As shown in (a) in FIG. 23, the first nanocrystalline layer includes a first region 1111 and a second region 1112. The first region 1111 is a region of a non-closed ring, and the second region 1112 is on an inner side and an outer side of the first region 1111. The first region 1111 in the first nanocrystalline layer 111 is a nanocrystal on which magnetic crushing has not been performed, and the second region 1112 in the first nanocrystalline layer 111 is a nanocrystal on which magnetic crushing has been performed. The third nanocrystalline layer 113 includes a third region 1131 and a second notch 1132. A projection of the second notch 1132 and a projection of the first region 1111 overlap. The third region 1131 is a region other than the second notch 1132 on the third nanocrystalline layer 113. The third region 1131 in the third nanocrystalline layer 113 is a nanocrystal on which magnetic crushing has been performed. A distance between the third nanocrystalline layer 113 and an induction coil 20 in the coil module is less than a distance between the first nanocrystalline layer 111 and the induction coil 20.

It should be understood that, the magnetic isolation sheet usually includes a plurality of layers of nanocrystal. The structures of the layers of nanocrystal may be the same or different. This is not limited in embodiments of this application. For example, the magnetic isolation sheet shown in FIG. 23 includes three layers of nanocrystal, of which two layers are first nanocrystalline layers 111 and one layer is the third nanocrystalline layer 113. The layers of nanocrystal may be connected by a double-sided tape. One cover film may be respectively disposed above and below the magnetic isolation sheet.

It should be understood that, the magnetic isolation sheet is usually combined with the induction coil as the coil module in the wireless charging device.

For example, the magnetic isolation sheet is combined with a power feeding coil for use as a coil module in a wireless charging transmitting end device.

For example, the magnetic isolation sheet is combined with a power receiving coil for use as the coil module in a wireless charging receiving end device.

In other words, the induction coil is usually disposed above the magnetic isolation sheet.

It should be understood that, the at least one layer of nanocrystal 110 in the magnetic isolation sheet is usually stacked. In the embodiments of this application, the at least one layer of nanocrystal 110 includes the first nanocrystalline layer 111 and the third nanocrystalline layer 113. Usually, the third nanocrystalline layer 113 is disposed above the first nanocrystalline layer 111. The induction coil is disposed above the magnetic isolation sheet, because the third nanocrystalline layer 113 is disposed above the first nanocrystalline layer 111, this is equivalent to that the distance between the third nanocrystalline layer 113 and the induction coil is less than the distance between the first nanocrystalline layer 111 and the induction coil.

The third nanocrystalline layer 113 includes a third region 1131 and a second notch 1132, and a projection of the second notch 1132 and the projection of the first region 1111 overlap. The third region 1131 is a region other than the second notch 1132 on the third nanocrystalline layer 113, and the third region 1131 in the third nanocrystalline layer 113 is a nanocrystal on which magnetic crushing has been performed.

It should be understood that to better improve charging efficiency of the wireless charging device, the first region 1111 is usually disposed below the induction coil, and the projection of the first region 1111 and a projection of the induction coil also overlap. In this case, because the projection of the second notch 1132 and the projection of the first region 1111 overlap, this is equivalent to that the second notch 1132 is also below the induction coil, and the projection of the second notch 1132 and the projection of the induction coil also overlap. When the projection of the second notch 1132 and the projection of the induction coil overlap, as shown in (b) in FIG. 23, the induction coil may occupy a space in which the second notch 1132 is located.

It should be understood that the induction coil may occupy all the space in which the second notch 1132 is located, or may occupy a part of the space in which the second notch 1132 is located. This is not limited in the embodiments of this application.

For example, as shown in (a) in FIG. 24, the induction coil occupies all the space in which the second notch 1132 is located. Therefore, the second notch 1132 is not shown in (a) in FIG. 24.

For example, as shown in (b) in FIG. 24, the induction coil occupies a part of the space in which the second notch 1132 is located. As shown in (b) in FIG. 24, the induction coil occupies a part of the space of the second notch 1132.

(a) in FIG. 24 is a cross-sectional view of a coil module according to an embodiment of this application. (a) in FIG. 24 is a cross-sectional view of another coil module according to an embodiment of this application.

It should be understood that to ensure safety of wireless charging, a thickness of the induction coil needs to be set to a value greater than a thickness threshold. Because the induction coil can occupy a space in which the second notch 1132 is located, in this case, when the thickness of the induction coil is kept unchanged, a thickness of the magnetic isolation sheet can be appropriately reduced, to reduce a thickness of the coil module.

The magnetic isolation sheet provided in the embodiments of this application is used in the coil module in the wireless charging device. The magnetic isolation sheet includes the first nanocrystalline layer and the third nanocrystalline layer. The third nanocrystalline layer includes a third region and a second notch. A projection of the second notch and the projection of the first region overlap. The third region is a region other than the second notch on the third nanocrystalline layer. The third region in the third nanocrystalline layer is a nanocrystal on which magnetic crushing has been performed. The distance between the third nanocrystalline layer and the induction coil in the coil module is less than the distance between the first nanocrystalline layer and the induction coil. In this case, this is equivalent to that the induction coil can occupy a space in which the second notch is located in the third nanocrystalline layer, so that while the thickness of the induction coil is kept unchanged, with the induction coil occupying the space in which the second notch is located, the thickness of the magnetic isolation sheet is reduced, so that the thickness of the coil module obtained by combining the magnetic isolation sheet and the induction coil is reduced, thereby saving a space in the wireless charging device.

In an embodiment of this application, a coil module is further provided. The coil module includes the magnetic isolation sheet and the induction coil shown in any one of the embodiments of FIG. 5 to FIG. 24.

An implementation principle and beneficial effects of the coil module provided in embodiments of this application are similar to those of the magnetic isolation sheet shown in any one of the embodiments of FIG. 5 to FIG. 24. Details are not described herein again.

In a possible case, the projection of the induction coil and the projection of the first region on the magnetic isolation sheet overlap.

The coil module provided in the embodiments of this application includes the induction coil and the magnetic isolation sheet. The magnetic isolation sheet includes at least one layer of nanocrystal. The at least one layer of nanocrystal includes the first nanocrystalline layer. The first nanocrystalline layer includes the first region. The first region is a region of a non-closed ring. The first region in the first nanocrystalline layer is a nanocrystal on which magnetic crushing has not been performed. The projection of the first region and the projection of the induction coil overlap. In this case, a magnetic field generated when the induction coil operates can be absorbed by the nanocrystal on which magnetic crushing has not been performed on the first nanocrystalline layer, so that an eddy-current loss caused by a change in magnetic flux of a magnetic field is avoided, thereby avoiding heating of the magnetic isolation sheet due to the eddy-current loss, and improving the efficiency of the wireless charging device.

In a possible case, the projection of the induction coil and the projection of the first region on the magnetic isolation sheet overlap, and a size of the induction coil is the same as a size of the first region on the magnetic isolation sheet.

It should be understood that during industrial production, sizes of two objects are the same, and usually are not exactly the same, and a tolerance exists between the two objects. Therefore, that the size of the induction coil is the same as the size of the first region on the magnetic isolation sheet means that the induction coil is slightly larger than the first region, or may mean that the induction coil is slightly smaller than the first region. This is not limited in the embodiments of this application.

Because the projection of the induction coil and the projection of the first region on the magnetic isolation sheet overlap, and the size of the induction coil is the same as the size of the first region on the magnetic isolation sheet, in other words, the induction coil is disposed right above the first region, in this case, a magnetic field generated when the induction coil operates can be absorbed by a nanocrystal that is right below the induction coil and on which magnetic crushing has not been performed. Therefore, a large-sized nanocrystal on which magnetic crushing has not been performed does not need to be arranged below the induction coil.

The coil module provided in the embodiments of this application includes the induction coil and the magnetic isolation sheet. The magnetic isolation sheet includes at least one layer of nanocrystal. The at least one layer of nanocrystal includes the first nanocrystalline layer. The first nanocrystalline layer includes the first region. The first region is a region of a non-closed ring. The first region in the first nanocrystalline layer is a nanocrystal on which magnetic crushing has not been performed. Because the projection of the first region and the projection of the induction coil overlap and the size of the induction coil is the same as the size of the first region on the magnetic isolation sheet, in this case, a magnetic field generated when the induction coil operates can be precisely absorbed by the nanocrystal on which magnetic crushing has not been performed on the first nanocrystalline layer, to avoid the arrangement of a large-size nanocrystal on which magnetic crushing has not been performed below the induction coil to absorb a magnetic field generated when the induction coil operates, thereby avoiding an excessively large size of the magnetic isolation sheet. In addition, the coil module provided in the embodiments of this application can further effectively improve the Charging efficiency of the wireless charging device through the nanocrystal on which magnetic crushing has not been performed in the first region, in other words, while the heating of the magnetic isolation sheet due to an eddy-current loss is avoided and the efficiency of the wireless charging device is improved, the coil module provided in the embodiments of this application can effectively reduce a space occupied by the coil module in an electronic device.

The coil module provided in the embodiments of this application may be used in the electronic device. Optionally, the electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used in the terminal device is not limited in this embodiment of this application.

Optionally, the electronic device may be a wireless charging transmitting end device.

Optionally, the electronic device may be a wireless charging receiving end device.

It should be understood that an implementation principle and beneficial effects of the foregoing electronic device are similar to those of the foregoing coil module and the magnetic isolation sheet in any one of FIG. 5 to FIG. 24. Details are not described herein again.

It may be understood that to implement the foregoing functions, the electronic device includes corresponding hardware and/or software modules for performing the functions. Algorithm steps in examples described with reference to embodiments disclosed in this specification may be implemented by hardware or a combination of hardware and computer software in this application. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments of this application, function modules of the electronic device may be divided based on the foregoing method example. For example, each function module may be divided according to each function, or two or more functions may be integrated into one module. It should be noted that module division in embodiments of this application is an example, and is merely logical function division. In actual implementation, there may be another division manner. It should be noted that a name of a module in this embodiment of this application is an example, and the name of the module is not limited in actual implementation.

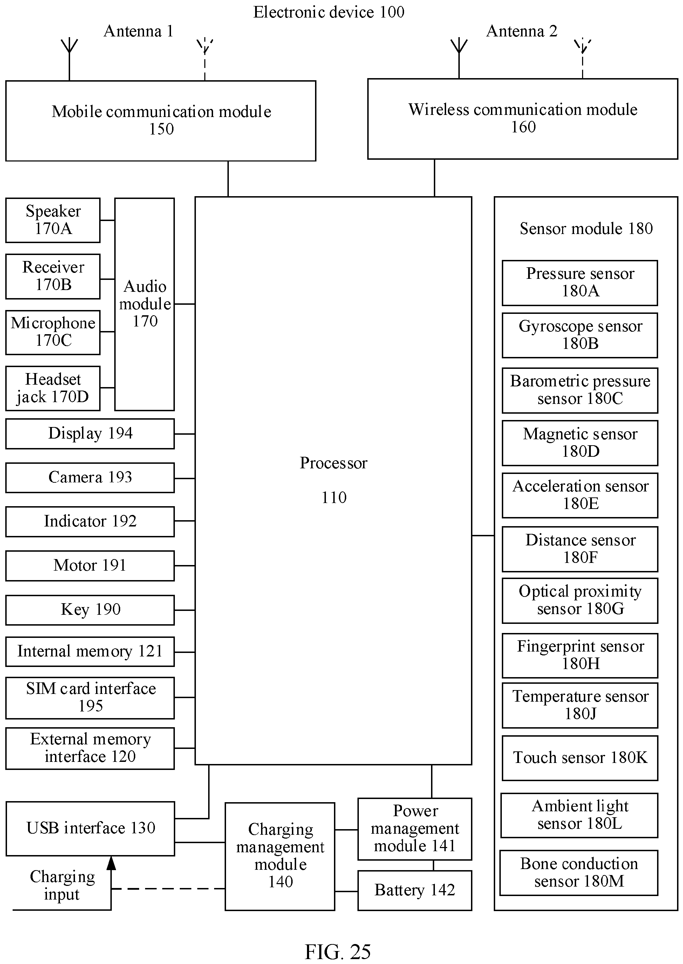

For example, FIG. 25 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The charging management module 140 is configured to receive charging input from the charger. The charger may be a wireless charger. In some embodiments of wireless charging, the charging management module 140 may receive a wireless charging input through a wireless charging coil of the electronic device 100. While charging the battery 142, the charging management module 140 may further supply power to the electronic device 100 through the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a cycle count of a battery, and a battery health state (electric leakage and impedance). In some other embodiments, the power management module 141 may alternatively be disposed in the processor 110. In some other embodiments, the power management module 141 and the charging management module 140 may alternatively be disposed in a same device.

It should be noted that any electronic device mentioned in embodiments of this application may include more or less modules in the electronic device 100.

A person skilled in the art can clearly understand that for convenience and conciseness of description, the specific working processes of the above-described systems, apparatuses, and units can be understood with reference to the corresponding processes in the above-described method embodiments and will not be repeated here.

In the several embodiments provided in this application, it should be understood that the disclosed system, apparatus, and method may be implemented in other manners. For example, the foregoing described apparatus embodiment is merely an example. For example, the unit division is merely logical function division, and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located at one position, or may be distributed on a plurality of network units. Some or all of the units may be selected depending on actual requirements to achieve the objectives of the solutions in the embodiments.

The foregoing descriptions are merely specific implementations of this application, but are not intended to limit the protection scope of this application. Any variation or replacement readily figured out by a person skilled in and familiar with the technical field within the technical scope disclosed in this application shall fall within the protection scope of this application. Therefore, the scope of protection of this application shall be subject to the scope of protection of the claims.

## Claims

1. A magnetic isolation sheet, used in a coil module in a wireless charging device, wherein the magnetic isolation sheet comprises a first nanocrystalline layer, the first nanocrystalline layer comprises a first region in a shape of a non-closed ring, and a material of the first region is a nanocrystal on which magnetic crushing has not been performed.

2. The magnetic isolation sheet according to claim 1, wherein the first nanocrystalline layer further comprises a second region, the second region is disposed at a periphery of the first region, and a material of the second region is a nanocrystal on which magnetic crushing has been performed.

3. The magnetic isolation sheet according to claim 2, wherein the first region and the second region are adjacent to each other.

4. The magnetic isolation sheet according to any one of claims 1 to 3, wherein the first region further comprises a first notch, and the first notch penetrates an inner diameter and an outer diameter of the ring of the first region.

5. The magnetic isolation sheet according to any one of claims 1 to 4, wherein the first nanocrystalline layer further comprises a third region disposed concentric with the first region, the third region is in a shape of a non-closed ring, and a material of the third region is a nanocrystal on which magnetic crushing has not been performed.

6. The magnetic isolation sheet according to any one of claims 1 to 4, wherein the first nanocrystalline layer further comprises a fourth region disposed concentric with the first region, the fourth region is in a shape of a closed ring, an outer diameter of the fourth region is less than the inner diameter of the first region, and a material of the fourth region is a nanocrystal on which magnetic crushing has not been performed.

7. The magnetic isolation sheet according to any one of claims 1 to 4, wherein the magnetic isolation sheet further comprises a second nanocrystalline layer, and a material of the second nanocrystalline layer is a nanocrystal on which magnetic crushing has been performed.

8. The magnetic isolation sheet according to claim 7, wherein a projection of the first nanocrystalline layer and a projection of the second nanocrystalline layer overlap.

9. The magnetic isolation sheet according to claim 7 or 8, wherein the second nanocrystalline layer further comprises a second notch, and a projection of the second notch and a projection of the first region in the first nanocrystalline layer overlap.

10. A coil module, used in an electronic device, wherein the coil module comprises the magnetic isolation sheet according to any one of claims 1 to 9 and an induction coil.

11. The coil module according to claim 10, wherein the induction coil is disposed on a side of the magnetic isolation sheet, and a distance between a first nanocrystalline layer in the magnetic isolation sheet and the induction coil is less than a distance between a second nanocrystalline layer in the magnetic isolation sheet and the induction coil.

12. The coil module according to claim 10, wherein the induction coil is disposed on a side of the magnetic isolation sheet, and a distance between a second nanocrystalline layer in the magnetic isolation sheet and the induction coil is less than a distance between a first nanocrystalline layer and the induction coil.

13. The coil module according to any one of claims 10 to 12, wherein a projection of the induction coil and a projection of the first region in the first nanocrystalline layer overlap.

14. An electronic device, wherein the electronic device comprises the coil module according to any one of claims 10 to 13.

15. The electronic device according to claim 14, wherein the electronic device is a wireless charging transmitting end device.

16. The electronic device according to claim 14, wherein the electronic device is a wireless charging receiving end device.

10

20

FIG. 1

FIG. 2

(a)

(b)

(c)

(d)

FIG. 3

10A

10B

08:00
January 1 Thursday

(a)

20B

20A

14:15

20A

20B

(b)

30A

30B

(c)

FIG. 4

(a)

(b)

(c)

FIG. 5

FIG. 6

(a)

(b)

(c)

FIG. 7

FIG. 8

Nanocrystalline loss: 636.91 mw Efficiency: 79.25%

(a)

Nanocrystalline loss: 102.78 mw Efficiency: 84.05%

(b)

FIG. 9

FIG. 10

FIG. 11

FIG. 12

FIG. 13

(a)

(b)

(c)

(d)

FIG. 14

FIG. 15

FIG. 16

FIG. 17

FIG. 18

FIG. 19

(a)

(b)

(c)

FIG. 20

(a)

(b)

□ Cover film
▨ Double-sided tape

FIG. 21

(a)

(b)

FIG. 22

(a)

(b)

FIG. 23

(a)

(b)

FIG. 24

Electronic device 100

FIG. 25

# INTERNATIONAL SEARCH REPORT

| | |
|---|---|
| International application No. | |
| | **PCT/CN2023/113759** |

**A. CLASSIFICATION OF SUBJECT MATTER**

H01F27/245(2006.01)i

According to International Patent Classification (IPC) or to both national classification and IPC

**B. FIELDS SEARCHED**

Minimum documentation searched (classification system followed by classification symbols)

IPC: H01F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 隔磁, 无线充电, 线圈, 纳米晶, 环形, 缺口, magnetic shield, wireless charging, wire, nanocrystalline, circle, gap

**C. DOCUMENTS CONSIDERED TO BE RELEVANT**

| Category* | Citation of document, with indication, where appropriate, of the relevant passages | Relevant to claim No. |
|---|---|---|
| Y | CN 110767434 A (ZONECHARGE SHENZHEN WIRELESS POWER TECHNOLOGY CO., LTD.) 07 February 2020 (2020-02-07)<br>description, paragraphs 34 to 49, and figures 1-7 | 1, 4, 10, 14-16 |
| Y | CN 111883352 A (SUNWAY COMMUNICATION JIANGSU CO., LTD.) 03 November 2020 (2020-11-03)<br>description, paragraphs 25 to 159, and figures 1-12 | 1, 4, 10, 14-16 |
| A | CN 112467824 A (XINWEI COMMUNICATION JIANGSU CO., LTD.) 09 March 2021 (2021-03-09)<br>entire document | 1-16 |
| A | US 2020105465 A1 (APPLE INC.) 02 April 2020 (2020-04-02)<br>entire document | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 November 2023** | **14 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# INTERNATIONAL SEARCH REPORT
**Information on patent family members**

International application No.

**PCT/CN2023/113759**

| Patent document cited in search report | | | Publication date (day/month/year) | Patent family member(s) | | | Publication date (day/month/year) |
|---|---|---|---|---|---|---|---|
| CN | 110767434 | A | 07 February 2020 | CN | 210984508 | U | 10 July 2020 |
|  |  |  |  | WO | 2021077643 | A1 | 29 April 2021 |
| CN | 111883352 | A | 03 November 2020 | CN | 212461358 | U | 02 February 2021 |
| CN | 112467824 | A | 09 March 2021 | CN | 112467824 | B | 28 April 2023 |
| US | 2020105465 | A1 | 02 April 2020 | WO | 2020068389 | A1 | 02 April 2020 |
|  |  |  |  | US | 11515083 | B2 | 29 November 2022 |
|  |  |  |  | US | 2023075207 | A1 | 09 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211110319